(19)

Europäisches Patentamt

European Patent Office

Office européen des brevets

(11) **EP 3 845 939 A1**

(12) **EUROPEAN PATENT APPLICATION**

(43) Date of publication:
07.07.2021 Bulletin 2021/27

(21) Application number: 19220026.9

(22) Date of filing: 30.12.2019

(51) Int Cl.:
**G02B 6/38** (2006.01)          G02B 6/14 (2006.01)
**G02B 6/26** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Xieon Networks S.à r.l.**
**2536 Luxembourg (LU)**

(72) Inventor: **Schimpe, Robert**
**85521 Riemerling / Hohenbrunn (DE)**

(74) Representative: **Kretschmann, Dennis**
**Boehmert & Boehmert**
**Anwaltspartnerschaft mbB**
**Pettenkoferstrasse 22**
**80336 München (DE)**

(54) **MULTI-FIBER CONNECTOR ARRANGEMENT WITH DECREASED MODE FIELD DIAMETER**

(57)     A method for providing an optical communication system comprises providing an optical device, the optical device comprising a plurality of optical transmission fibers, each optical transmission fiber having a first end and a second end opposite to the first end. The optical device further comprises a connector interface, wherein the respective first ends of the plurality of optical transmission fibers form an array of connector elements on the connector interface. The method further comprises coupling the first end and/or the second end of the plurality of optical transmission fibers to a respective plurality of waveguides. The plurality of optical transmission fibers have a first mode field diameter and the plurality of waveguides have a second mode field diameter, when a ratio of the first mode field diameter and the second mode field diameter is no larger than 0.95.

Fig. 1a

**EP 3 845 939 A1**

**Description**

Field of the Disclosure

The disclosure relates to optical communication systems, in particular to techniques for providing a multi-fiber connector arrangement with decreased mode field diameter, such as to reduce the risk of injury to operating personnel.

Background

Optical fibers are widely used for transmitting optical communication signals with low optical loss to the outside world. However, the high-intensity laser light may provide a risk of injury for the operating personnel when the laser light leaves the optical fiber, in particular when an optical fiber connection is opened during a set up or maintenance of an optical communication system. Laser safety requirements require that the intensity of light focused on the retina of the human eye does not exceed a certain predefined intensity level, which may depend on the laser wavelength. Since the minimum focusing distance of the human eye is limited, some laser safety classes consider power levels up to certain predefined thresholds tolerable if the surface is inspected without optical instruments. The rationale is that within a distance from the end surface of the fiber that corresponds to the minimum focusing distance the light is spread sufficiently so that intensity on the human skin and eye does not exceed the maximum allowed level.

As an example, at a typical optical transmission wavelength of 1550 nm power levels up to 136 mW (21.3 dBm) may be used in fibers with a mode field diameter (MFD) of 10.4 $\mu$m. This is a high power value but may allow optical communication with precautions for the Safety of optical fibre communication systems (OFCS) described by the standard recommendations of the International Electrotechnical Commission (IEC).

However, the assessment may be different when a plurality of optical fibers are connected in a fiber bundle, where the individual fibers may be so close together that the optical fields at the minimum focusing distance overlap almost completely, and their intensities sum up. Assuming a fiber bundle with 10 individual fibers, the power in each fiber is limited to 11.3 dBm at wavelength of 1550 nm in order to guarantee that the combined maximum intensity on the skin or cornea is below the threshold level, and this can be a severe limitation in many applications.

Common techniques for reducing the emission risk to the operating personnel involve closing optical shutters, increasing the optical attenuation or a variable optical attenuator or even reducing or shutting down the power of laser when fibers break or connectors are opened. However, these techniques may seriously affect the transmission efficiency. In addition, they typically require components for supervision, which can introduce additional loss of several tenth of a dB.

In an exemplary application, the output of several optical multiplexers can be fed to a multi waveguide patch cord and appear on a common side on a multi waveguide end connection. If the connection is opened, high power can be emitted. It is not easy to communicate power reduction commands to the multiplexer circuits or even to the transponders feeding signals to the multiplexers.

Similarly, in a Reconfigurable Optical Add/Drop Multiplexer (ROADM) site several circuit packs for managing DWDM signals (e.g., wavelength selective switch (WSS) circuit packs) can be interconnected via patch cords having multi waveguide end connectors and a waveguide shuffle. One of these connections can be opened. It is not easy to communicate power reduction commands to the ROADM circuit packs feeding optical power to the open multi waveguide connector via the shuffle. Additionally, an upstream ROADM circuit pack may have a configuration error, which may increase the power emitted from the open multi waveguide end connector. This can increase the risk for human injury.

The miniaturization of electro-optical (e/o) converters has created new optical connector form factors, to interface optically to the incoming and outgoing high data rate signals. Such miniaturized optical connectors can also be used for cabling between circuit packs for wavelength management in a ROADM site. Such miniaturized optical connectors can have two wavelength ends. The e/o converters can be operated with moderate optical power level and normally have a dedicated transmit port (TX) and receive port (RX). Circuit packs in ROADM sites can manage signals with much higher power level than e/o converters normally do. In ROADM sites bidirectional traffic over a single waveguide end can occur.

Erbium-doped optical fibers for optical amplifiers for the 1550 nm wavelength range can have mode field diameters (MFD) in the range 5.5 $\mu$m +-1 $\mu$m to increase the intensity of pump light. Outside of Er doped fiber, means maybe provided to increase the MFD to values used in state-of-the-art cabling systems.

For dense space cabling, ITU-T G.657.A2 compliant fibers maybe used. They offer optimized bending properties. Mode field diameters can be in the range 9.6 $\mu$m +- 0.5 $\mu$m at 1550 nm wavelength. This range of state-of-the art cabling system still overlaps with the MFD range used in long distance applications. In long-distance applications, ITU G.652.D compliant single mode fibers guarantee performance consistency as required for the transmission of high data rates over long distances. Typical mode field diameters for long-distance transmission are in the range 10.4 $\mu$m +- 0.5 $\mu$m at 1550 nm wavelength.

EP 1059707 A2 discloses fiber ribbons with a large effective area waveguide.

Overview

In view of the cited prior art and the shortcomings identified above, there remains a need for efficient techniques for reducing the risk of laser injury in applications involving a multi-fiber arrangement.

This problem is solved with a method for providing an optical communication system according to claim 1, an optical device according to claim 8, and an optical communication system according to claim 15. The dependent claims relate to optional embodiments.

In a first aspect, the disclosure relates to a method for providing an optical communication system, comprising: Providing an optical device, the optical device comprising a plurality of optical transmission fibers, each optical transmission fiber having a first end and a second end opposite to the first end. The optical device further comprises a connector interface, wherein the respective first ends of the plurality of optical transmission fibers form an array of connector elements on the connector interface. The method further comprises coupling the first end and/or the second end of the plurality of optical transmission fibers to a respective plurality of waveguides. The plurality of optical transmission fibers have a first mode field diameter and the plurality of waveguides have a second mode field diameter, wherein the ratio of the first mode field diameter and the second mode field diameter is no larger than 0.95.

By reducing the mode field diameter of the plurality of optical transmission fibers in accordance with this ratio, the total optical intensity at the connector interface can be substantially reduced, thereby reducing the risk of injury to the operating personnel without the need for additional safety precautions, and without the need to substantially reduce the power level of the optical signal transmission.

In some instances, the coupling of the first end and/or the second end of the plurality of optical transmission fibers with relatively lower first mode field diameter to the respective plurality of waveguides with relatively higher second mode field diameter may lead to coupling losses. However, the inventor realized that the gain in laser transmission power that is made possible by the techniques of the present disclosure overcompensates the coupling losses in typical applications.

The techniques of the present disclosure may be used advantageously in a large number of applications, in particular whenever a plurality of optical transmission fibers in close spatial proximity are employed. For instance, the optical device maybe a multi-fiber connector, a connector of a breakout cable or patch cord, or a coupling interface of a wavelength selective switch (WSS).

In particular, in some embodiments the optical device may be a passive optical device. In other examples, the optical device may be an active optical device, and may comprise a laser source, an optical amplifier and/or other components.

In the context of the present disclosure, an optical transmission fiber may be any device suitable for communicating optical signals, such as laser signals, between a source and a destination. In particular, an optical transmission fiber may be a single-mode optical fiber.

According to an embodiment, the plurality of optical transmission fibers may comprise any number of optical transmission fibers. In particular, the plurality of optical transmission fibers may comprise at least 2 optical transmission fibers, or at least 3 optical transmission fibers, or at least 4 optical transmission fibers, or at least 5 optical transmission fibers, or at least 6 optical transmission fibers, or at least 7 optical transmission fibers, or at least 8 optical transmission fibers, or at least 10 optical transmission fibers.

A connector interface, in the context of the present disclosure, may refer to any interface that allows for coupling to the plurality of optical transmission fibers at their respective first ends.

The plurality of waveguides to which the plurality of optical transmission fibers couple may be or may comprise any element suitable for transmitting or processing optical signals, either active or passive. In particular, the plurality of waveguides may comprise a second plurality of optical transmission fibers.

A mode field diameter (MFD), in the context of the present disclosure, may denote a measure of an irradiance, i.e., an optical power per unit area across an end face of an optical transmission fiber.

While the electromagnetic wave that represents the optical signal is propagating inside of the fiber, guiding properties of the fiber typically cancel diffraction effects. However, once the beam leaves the fiber, the confinement is no longer maintained, and the beam begins to spread. The spreading can be modelled in terms of Bessel functions, which can in turn be well approximated by a Gaussian distribution in many relevant applications. Reference is made in this regard to A. M. Kowalevicz, F. Buchholtz, "Beam Divergence from an SMF-28 Optical Fiber", Naval Research Laboratory, NRL/MR/5650-06-8996, October 2006. In the Gaussian approximation, the mode field diameter can be characterised as the beam diameter at which the electric and magnetic field strength are reduced to $1/e$ of their maximum values, i.e., the beam diameter at which the power density is reduced to $1/e^2$ of the maximum power density, because the power density is proportional to the square of the field strengths.

According to an embodiment, the ratio of the first mode field diameter and the second mode field diameter is no larger than 0.90, and in particular no larger than 0.85 or no larger than 0.80 or no larger than 0.75 or no larger than 0.70.

Decreasing the ratio allows to further reduce the power intensity at the interface.

According to an embodiment, the first mode field diameter is no larger than 9.5 $\mu$m, and in particular no larger than 9.0 m$\mu$ or no larger than 8.5 $\mu$m or no larger than 8.0 $\mu$m or no larger than 7.5 $\mu$m or no larger than 7.0 $\mu$m.

These mode field diameters are significantly smaller than typical mode field diameters used for long-distance transmission optical fibers, which may be in the range of 10 $\mu$m or higher.

According to an embodiment, the second mode field diameter is no smaller than 10.0 $\mu$m, and in particular no smaller than 10.3 $\mu$m.

In general, the mode field diameter of an optical transmission link may depend on the wavelength. In the context of the present disclosure, the conditions on the absolute values of the mode field diameters and the ratios may be considered to be met if they are met at a single transmission wavelength, or alternatively for a plurality of transmission wavelengths or across a predetermined range of transmission wavelengths.

In particular, the first mode field diameter and/or the second mode field diameter may be mode field diameters determined at a pre-defined wavelength, such as 1550 nm.

Alternatively or additionally, the plurality of optical transmission fibers and/or the plurality of waveguides may be characterized in terms of their effective optical area.

In an embodiment, the plurality of optical transmission fibers have a first effective optical area and the plurality of waveguides have a second effective optical area, wherein a ratio of the first effective optical area and the second effective optical area is no larger than 0.90, and in particular no larger than 0.85 or no larger than 0.80 or no larger than 0.75 or no larger than 0.70.

The first effective optical area and the second effective optical area and their ratio may likewise depend on the wavelength.

According to an embodiment, the first effective optical area and/or the second effective area are determined at a predefined wavelength, in particular at 1550 nm.

According to an embodiment, a cut-off wavelength of the plurality of optical transmission fibers and/or the plurality of waveguides may be no larger than 1530 nm or no larger than 1500 nm or no larger than 1450 nm or no larger than 1400 nm.

According to another embodiment, a cut-off wavelength of the plurality of optical transmission fibers and/or the plurality of waveguides may be no smaller than 1530 nm or no smaller than 1600 nm or no smaller than 1650 nm or no smaller than 1700 nm.

In the context of the present disclosure, the first ends of the plurality of optical transmission fibers may be arranged in any shape on the connector interface.

In an example, the array is a rectangular array.

According to an embodiment, a distance between neighbouring first ends of the plurality of optical transmission fibers on the connector interface is no larger than 10 mm, and in particular no larger than 9 mm or no larger than 8 mm or no larger than 7 mm or no larger than 6 mm or no larger than 5 mm or no larger than 4 mm or no larger than 3 mm or no larger than 2 mm or no larger than 1 mm.

In an embodiment, the method further comprises adapting or adjusting a refractive index profile of the plurality of optical transmission fibers and/or the plurality of waveguides at the respective connector elements.

Adapting the refractive index profile may assist in reducing optical losses at the connector interface.

In an example, adapting or adjusting the refractive index profile may comprise tapering and/or splicing.

In a second aspect, the disclosure relates to an optical device, comprising a plurality of optical transmission fibers, each optical transmission fiber having a first end and a second end opposite to the first end; and a connector interface, wherein the respective first ends of the plurality of optical transmission fibers form an array of connector elements on the connector interface. The plurality of optical transmission fibers have a first mode field diameter, wherein the first end and/or the second and of the plurality of optical transmission fibers are adapted to couple to a respective plurality of waveguides having a second mode field diameter, wherein a ratio of the first mode field diameter and the second mode field diameter is no larger than 0.95.

According to an embodiment, the ratio of the first mode field diameter and the second mode field diameter is no larger than 0.90, and in particular no larger than 0.85 or no larger than 0.80.

According to an embodiment, the first mode field diameter is no larger than 9.5 $\mu$m, and in particular no larger than 9.0 $\mu$m or no larger than 8.5 $\mu$m or no larger than 8.0 $\mu$m.

According to an embodiment, the second mode field diameter is no smaller than 10.0 $\mu$m, and in particular no smaller than 10.3 $\mu$m.

According to an embodiment, the first mode field diameter and/or the second mode field diameter are mode field diameters at a predefined wavelength, in particular at 1550 nm.

According to an embodiment, the plurality of optical transmission fibers have a first effective optical area, and the plurality of waveguides have a second effective optical area, wherein a ratio of the first effective optical area and the second effective optical area is no larger than 0.90, and in particular no larger than 0.85 or no larger than 0.80.

According to an embodiment, a distance between neighbouring first ends of the plurality of optical transmission fibers on the connection interface is no larger than 10 mm, and in particular no larger than 9 mm or no larger than 8 mm.

In an embodiment, the connector interface comprises an adaptation element configured to adapt or to adjust a refractive index profile of the plurality of optical transmission fibers and/or the plurality of waveguides at the respective connector elements.

In an example, the adaptation element may comprise a waveguide taper.

According to an embodiment, the connector interface comprises a verification element that is adapted to prevent the respective first ends of the plurality of optical transmission fibers from coupling to a waveguide, or vice versa, unless a ratio of the first mode field diameter and a mode field diameter of the waveguide is no larger than 0.95, and in particular no larger than 0.90 or no larger than 0.85 or no larger than 0.80.

The verification element may hence make sure that the waveguide can only couple to a connector interface whose optical transmission fibers have a sufficiently small mode field diameter to provide effective laser safety in case the connection is opened, such as during maintenance.

The verification element may comprise electronic means for reading out and identifying the connector interface and the waveguide.

In other examples, a shape of the verification element may match a complementary shape provided at the waveguide, and an optical connection may only be possible when the shapes match.

According to an embodiment, the optical device is a multi-fiber connector, or comprises a multi-fiber connector.

In a third aspect, the disclosure relates to an optical communication system comprising an optical device and the plurality of waveguides, wherein the optical device may have some or all of the features described above and the plurality of waveguides may have some or all of the features described above. The first end and/or the second end of the plurality of optical transmission fibers are coupled to the respective plurality of waveguides, in particular may be detachably coupled to the respective plurality of waveguides.

Brief Description of the Figures

The features and numerous advantages of the techniques of the present disclosure will be best apparent from a description of specific embodiments with reference to the appended drawings, in which:

Fig. 1a    is a schematic illustration of an optical device and an optical communication system according to an embodiment;

Fig. 1b    is a schematic illustration of an optical device according to another embodiment;

Fig. 2    is a diagram illustrating an accessible emission efficiency of a single mode waveguide versus mode field diameter in the context of an embodiment;

Fig. 3    schematically illustrates a spatial intensity distribution of radiation emitted from a multi-fiber connector according to an embodiment;

Fig. 4    is a schematic illustration of a test configuration for characterizing an open multi-fiber connector according to an embodiment;

Fig. 5a    is a diagram illustrating a hazard power per waveguide of a 2-fiber connector according to an embodiment;

Fig. 5b    is a diagram illustrating a hazard power per waveguide of an 8-fiber connector according to an embodiment;

Fig. 6    is a schematic illustration of an optical communication system employing breakout cables with a multi-fiber connector according to an embodiment;

Fig. 7    is a schematic illustration of a patch cord employing a multi-fiber connector according to an embodiment;

Fig. 8    is a schematic illustration of a patch cord employing a multi-fiber connector according to another embodiment;

Fig. 9    is a schematic illustration of an optical communication system employing a plurality of breakout cables according to an embodiment;

Fig. 10a-10d    schematically illustrate components of a multi-fiber connector according to an embodiment;

Fig. 11a-11d    schematically illustrate various possible shapes of a multi-fiber connector and a matching adapter according to an embodiment;

Fig. 12        is a schematic illustration of an optical communication system comprising a waveguide shuffle according to an embodiment;

Fig. 13        is a schematic illustration of an optical communication system comprising an optical demultiplexer according to an embodiment;

Fig. 14        is a schematic illustration of an optical communication system comprising a plurality of optical amplifiers according to an embodiment;

Fig. 15        is a schematic illustration of an optical communication system comprising wavelength selective switches according to an embodiment;

Fig. 16        is a schematic illustration of an optical communication system comprising ROADM cards and a fiber shuffle according to an embodiment;

Fig. 17        is a schematic illustration of another optical communication system comprising a ROADM site according to an embodiment; and

Fig. 18        is a flow diagram illustrating a method for providing an optical communication system according to an embodiment.

Detailed Description

Transmission of optical power can be established via an optical waveguide, in particular a passive optical transmission fiber. The power in the optical waveguide can depend on the filling of optical spectral bands with optical waves, and on the filling of spatial optical propagation modes supported in the waveguide with optical waves.

Transmission of optical power may employ a cable containing several optical waveguides. The total optical power carried by a cable with several optical waveguides can amount to a multiple of the power carried by a cable with a single waveguide. The power carried in a cable comprising several waveguides can increase by taking in use further optical waveguides. The optical waveguides can be in separated optical fibers or in a common fiber with several optical waveguide cores.

The power in an optical waveguide of a fiber containing several waveguide cores can increase by coupling of power from a neighboring optical waveguide into this waveguide.

For the background art, reference is made to ITU-T SERIES G: Transmission Systems and Media, Digital Systems and Networks; Transmission media characteristics - Optical fiber cables G.650 - G.659. This technical norm provides recommendations for the characteristics and characterization of optical fiber cables and optical waveguides.

The G.650.1 (03/2018) recommendation "Definitions and test methods for linear, deterministic attributes of single-mode fiber and cable" defines the test methods for the parameters mode field diameter (MFD) and two types of cut-off wavelength, which are used repeatedly in the context of the disclosure.

ITU-T G.654.D (11/2016) lists fiber waveguides with mode field diameter values up to 15.7 $\mu$m at wavelength of 1550 nm and a maximum cable cut-off wavelength of 1530 nm for single-mode transmission at around 1550 nm.

Definition and test method other than recommended in G.650.1 (03/2018) is possible for the parameters mode field diameter and cut-off wavelength used in the context of the disclosure.

Optical waveguides can be joined by means for optical connection, such as multi-fiber connectors or adapters. These devices often need to be accessible to service personnel, such as for maintenance or reconfiguration of the optical network. Service personnel may open such an optical connection, and optical radiation can be emitted from one or several waveguide ends in the process. This may result in an enhanced risk for human injury in case the emitted optical radiation exceeds the limits being defined in standards for radiation safety.

The International Electrotechnical Commission standard for the safety of optical fiber communication systems IEC 60825-2:2004+A1:2006+A2:2010 and the normative references cited in this publication discuss setups for doing safety measurements on optical communication systems, as well as hazard level 1M, laser class 1, 1M and 4. The use of a parameter mode field diameter for characterizing optical waves guided in arrangements is likewise described in this reference.

In the context of the present disclosure, the power limit for safe laser operation in a potentially open emitting optical waveguide end maybe denoted as P_hazard. The level of P_hazard at the waveguide end or ends in a connector at a specified wavelength is a characterizing measure to distinguish between configurations according to the disclosure and the prior art.

Some configurations according to the disclosure may not contain light sources so that it is not obvious how to describe their behavior in terms given in the referenced ITU-T and IEC standards. Therefore, the parameter accessible emission efficiency (AEE) is defined to distinguish configurations according to the present disclosure from the prior art.

The techniques of the disclosure may reduce the level of emission accessible at distance from the open connector within a circular aperture stop.

For a given connector with two or more waveguide ends one can select the optical wavelengths or wavelength ranges for measurement and can define nominal output waveguides which can emit and nominal input waveguides which have nominally no emission at the selected wavelengths. Further one can set the measurement distance D to a fix value and define a parameter accessible emission efficiency (AEE) as a ratio of the highest total power measurable behind the aperture stop arranged at any position with distance D from the open connector and the total power emitted from the open connector arrangement at the selected wavelengths.

For example, a connector with eight waveguide ends can be analyzed with four nominal output waveguides and four nominal input waveguides. In a conservative approach, the power emitted per nominal output waveguide can be identical. The power emitted per nominal input waveguide can be zero. But in a real system it is not unlikely that the power emitted per nominal input waveguide is not zero. In a conservative approach, the upper limit can be defined as a fraction of the power emitted per nominal output waveguide. For example, the fraction can be one third (- 4.7 dB). Furthermore, the measurement wavelength can be 1550 nm, wherein time dependent measurement signals can create spectral broadening. Following the referenced technical standards, the measurement distance D can be 100 mm, and the aperture stop can have a diameter 3.5 mm.

An optical communication system according to an embodiment may comprise a pair of optical connectors, wherein at least two optical waveguides terminate in each connector forming the optical connection.

An optical communication system according to an embodiment may further comprise an adapter for housing the pair of optical connectors.

An optical communication system according to an embodiment comprising a connector and an adapter may comprise a key/lock arrangement, whereby a key or spring arrangement can match with appropriate groove or slit arrangements.

A connector with a waveguide end according to the disclosure can be designed such that it mates with a state-of-the art connector. Particularly, if the connectors are plugged together, the connector according to the disclosure may be compatible with a state-of-the-art adapter, the keys/springs and grooves/slits can slide into each other and waveguide ends are aligned such that a low optical loss connection to the waveguide ends of the state-of-the art connector can be established.

On the other hand, special adapters according to the disclosure can be constructed. The choice of the adapter can be made dependent on the intended use of the adapter and the connector according to the disclosure.

For example, the adapter may have at least one side with means to be selective with respect to a connector according to the disclosure. As an example, the at least one side of adapter according to an embodiment can be made such that the connector according to the disclosure can be plugged, but a state-of-the-art connector cannot be plugged. As an example, the key/lock arrangement matches for a connector according to the disclosure, but it does not match for a state-of-the-art connector.

For example, an MPO type multi-waveguide end connector according to an embodiment can have a mode field diameter of 9 $\mu$m at 1550 nm wavelength and can be located at the common side of a breakout cable. The MPO type multi-waveguide connector according to an embodiment can have an AEE of 5 % (-13 dB) or less at wavelength 1550 nm. The intended use of the individualized side of the breakout cable can be with state-of-the art patch cords having in the connector a waveguide end or waveguide ends with AEE of 7.2 % (-11.4 dB) at 1550 nm. The AEE of the MPO connector according to the disclosure is advantageously lower.

The power per waveguide incoming from an outside to the individualized side connectors will superimpose on the common side MPO multi-waveguide-end connector. Hence, the MPO multi-waveguide connector on the common side of the breakout cable can carry high power. It can make sense to plug the common side MPO multi-waveguide connector into an adapter, which may be on the counter-part side selective to a connector with low AEE according to the disclosure.

Further, an adapter according to an embodiment can be selective to a specific type of connector according to the disclosure, or a special adapter can be constructed for a SN® type connector, which enforces that state-of-the-art connectors or connectors according to the disclosure must be flipped before plugging, as will be explained in more detail below.

As indicated above, optical communication systems according to an embodiment may have several optical waveguides ending in a connector. The waveguides may be arranged as parallel stripes on a planar substrate or may be arranged in fibers.

Optical waveguide ends in the connector may have circular or non-circular cross section.

End faces of a waveguides in the connector may be straight or may be tilted.

The system employing the optical waveguide can be an optical communication system. In such a system, arrangements according to disclosure can be used with advantage at optical wavelengths around 1550 nm, for example.

Guiding of optical waves can be achieved by a change in density of material or by an interface between materials. Material employed in an optical waveguide can be electrically conducting (e.g. Au), semiconducting (e.g. Si or InGaAsP) or insulating (e.g. PMMA, $Si_3N_4$ or $SiO_2$.).

As indicated above, optical waveguide ends in connector according to disclosure can be ends of optical fibers. Optical fiber waveguides can be made of glass preform having steps in the radial material composition and in the refractive index profile. For example, as known from textbooks (e.g. Kyunghwan Oh, Un-Chul Paek: "Silica Optical Fiber Technology for Devices and Components: Design, Fabrication and International Standards", ISBN 978-0-471-45558-5), the fibers can be drawn from silica glass rod. The silica glass rod can contain dopants with a composition and/or a density varying in a radial direction. For example, the core of the rod can be doped with a refractive index raising material such as germanium oxide ($GeO_2$), and/or a tube-shaped area around a core area of the rod can be doped with fluorine (F), which is known to efficiently lower the refractive index. This fiber waveguide type can be denoted as step-index fiber.

The invention can be applied to optical connection terminating single mode cables or cabled fibers. The single-mode property of a cable or cabled fiber can be defined via the parameter cable cut-off wavelength $\lambda_{cc}$ described in ITU-T G.650.1 (03/2018). A cable or cabled fiber is considered single mode at a wavelength greater than the cable cut-off wavelength $\lambda_{cc}$.

ITU-T G.650.1 (03/2018) describes also the fiber cut-off wavelength $\lambda_c$, which can have higher value than the cable cut-off wavelength $\lambda_{cc}$.

ITU-T G.650.1 (03/2018) and the documents referenced therein explain that the fiber cut-off wavelength $\lambda_c$ can even be higher than the operating wavelength relying on the effects of cable fabrication and installation to yield cable cut-off wavelength $\lambda_{cc}$ values below the minimum operating wavelength for the shortest length of cable between two joints. A joint can be an optical connection according to invention.

The parameter mode field diameter can be applied to single mode fiber. The mode field diameter can be determined via the far field method described in ITU-T G.650.1 (03/2018). The far-field technique calculates the mode field diameter by integrating the actual intensity distribution over the range of far field angles. The described far-method uses the so-called Petermann II definition of mode field diameter.

The far-field method is considered very appropriate in view of this disclosure, because the accessible emission efficiency relies on the distribution of the emission of the waveguide end in the far field.

The propagation characteristics of a cylindrical step-index fiber can be modelled by a cylindrical symmetric optical fiber consisting of a core with diameter $D_{co}$ and a refractive index $n_{co}$, and a cladding with a refractive index $n_{cl}$. The publication by C. D. Hussey et al., "Approximate analytical forms for the propagation characteristics of single-mode optical fibres", Electron. Lett. 21 (23), 1103 (1985) gives a formula for the approximate calculation of the mode field diameter of the step index fiber. The approximate mode field diameter MFDstep$_{appfar}$ maybe obtained as follows.

$$MFDstep_{appfar} = D_{co} * \left( 0.634 + 1.619 * {}^{-3/2} + 2.879 * V \quad - 1.561 * \right) \qquad (1)$$

$$\text{with } V = \pi * \frac{D_{co}}{\lambda} * \sqrt{n_{co}^2 - n_{cl}^2} \qquad (2)$$

The modelled step-index fiber waveguide is single mode for wavelengths greater than the approximate fiber cutoff wavelength $\lambda_{cstepapp}$, where

$$\lambda_{cstepapp} = D_{co} * \pi * \frac{\sqrt{n_{co}^2}}{2.405} \qquad (3)$$

This modeling does not take into account that the parameters $D_{co}$, $n_{co}$ and $n_{cl}$ can vary along the fiber waveguide before the waveguide end is reached. This is one of the reasons for spread of the values of mode field diameter in real fiber.

In some cases a value for the effective optical area $A_{eff}$ value is given. $A_{eff}$ can quantify the area of the fiber cross-section used for light transmission calculated with respect to nonlinear effects of the waveguide material. The value of the effective optical area $A_{eff}$ can be mapped to a further approximation of the mode field diameter $MFD_{apparea}$ via a mapping factor depending on wavelength.

In some cases, an approximation for the mode field diameter $MFD_{appnear}$ is available, which is obtained by a measurement of the near field intensity distribution at the waveguide end. $MFD_{appnear}$ can represent a measure of the transverse extent of the electromagnetic field intensity of the mode across the waveguide end cross section. The mode field diameter $MFD_{appnear}$ can be defined here as the diameter at which the near field intensity or a Gauss approximation thereof falls to $1/e^2$ of its maximum value.

A further value for the mode field diameter $MFD_{appoffset}$ can be obtained by the so-called transverse offset measurement technique.

A mode field diameter can be denoted by the letter d or be abbreviated by MFD in the context of the disclosure.

Some embodiments require an estimate of the optical intensity at the waveguide end. To a first approximation the intensity can be estimated by the ratio between the power guided in the waveguide and the area occupied by the optical field. To a first approximation, this area can be obtained by the effective optical area mentioned above or by using the mode field diameter to approximately calculate the parameter mode field area (MFA). The mode field area (MFA) of the intensity distribution can be obtained as

$$\text{MFA} = \pi * \frac{d^2}{4} \qquad (4)$$

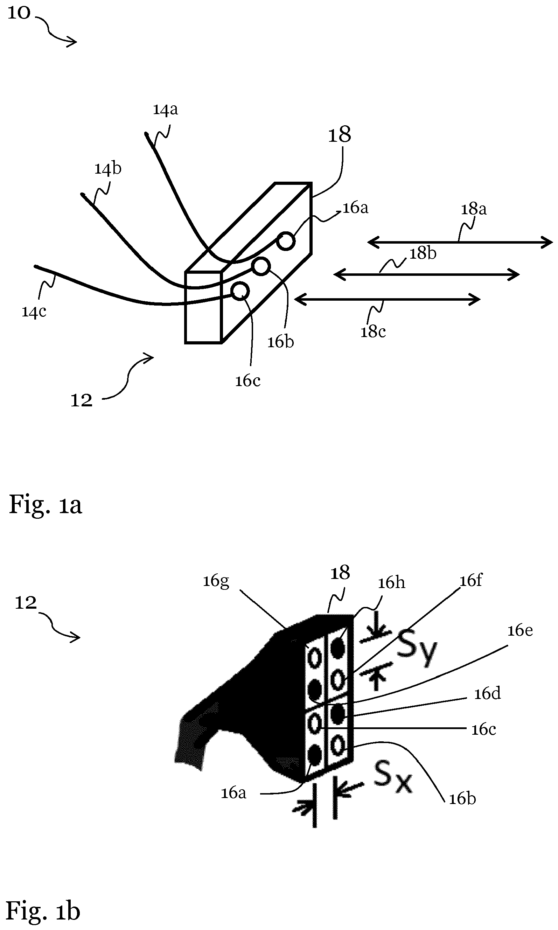

Fig. 1a is a schematic illustration of an optical communication system 10 according to an embodiment.

The optical communication system 10 comprises an optical device 12, such as a multi-fiber connector. The multi-fiber connector 12 comprises a plurality of optical transmission fibers 14a, 14b, 14c, wherein a respective first end of each of the optical transmission fibers 14a, 14b, 14c terminates in a respective connector element 16a, 16b, 16c on a connector interface 18 of the multi-fiber connector 12. A respective second end of each of the optical transmission fibers 14a, 14b, 14c may be connected to further active or passive components (not shown) of the optical communication environment.

In the configuration of Fig. 1a, the multi-fiber connector 12 has three optical transmission fibers 14a, 14b, 14c and three corresponding connector elements 16a, 16b, 16c. However, this is for illustration only, and in other applications the multi-fiber connector 12 may comprise a smaller or larger number of optical transmission fibers and connector elements.

As further illustrated in Fig. 1a, the optical communication system 10 additionally comprises a plurality of waveguides 18a, 18b, 18c that are adapted to couple with the respective optical transmission fibers 14a, 14b, 14c via the respective connector element 16a, 16b, 16c. For instance, the waveguides 18a, 18b, 18c may be optical fibers of a long-range optical transmission channel.

In the configuration shown in Fig. 1a, the plurality of optical transmission fibers 14a, 14b, 14c have a first mode field diameter $d_1$, and the plurality of waveguides 18a, 18b, 18c have a second mode field diameter $d_2$, wherein the ratio $d_1/d_2$ is no larger than 0.95.

In particular, the plurality of waveguides 18a, 18b, 18c may have a second mode field diameter $d_2$ = 10.4 $\mu$m, and the first mode field diameter $d_1$ of the plurality of optical transmission fibers 14a, 14b, 14c may be chosen with ratio $d_1/d_2$ no larger than 0.9.

In particular, the plurality of waveguides 18a, 18b, 18c may have a second mode field diameter $d_2$ no larger than 11 $\mu$m at 1550 nm wavelength.

The relatively smaller mode field diameter $d_1$ of the plurality of optical transmission fibers 14a, 14b, 14c allows to increase the divergence of the light beam emitted from the open terminations on the connector interface 18, and hence reduces the resulting total power density in the spatial proximity of the connector interface 18.

Fig. 1b is a schematic illustration of a multi-fiber connector 12 according to another embodiment, and the same reference numerals are used to designate corresponding components. In the configuration of Fig. 1b, the connector interface 18 comprises a rectangular array of 4 x 2 connector elements 16a - 16h, with respective spacings $S_x$ between neighbouring connector elements along a horizontal direction and respective spacings $S_y$ between neighbouring connector elements along a vertical direction. For instance, $S_x$ = 2 mm and $S_y$ = 3 mm. In other embodiments the horizontal and vertical spacings may be chosen to coincide, $S_x = S_y$.

In some embodiments, only a subset 16b, 16c, 16f, 16g of the connector elements may be adapted to emit optical radiation (drawn as light circles in Fig. 1b), whereas the complimentary subset 16a, 16d, 16e, 16h (drawn as full circles in Fig. 1b) maybe receiving ports. This may further increase the relative spacing between the emitting connector elements, thereby reducing the effective power density in the spatial vicinity of the connector interface 18.

In some embodiments, a practical optical power limit $P_{pr}$ at an optical waveguide end for having minimal damage risk may be based on the intensity value 2.5 mW per $\mu$m$^2$ mode field area. For example, a coil with dispersion compensating fiber can have a fiber with GeO2 doped core, because dispersion compensation with the optical fiber can be realized by waveguides with small diameter of the core in conjunction with a high fraction of the optical mode field concentrated in the core.

For example, a communication system according to an embodiment can have a connector with several waveguide ends, wherein at least one has a SiO2-GeO2 core material with small diameter (e. g. 6.5 $\mu$m) in conjunction with refractive index being higher (e.g. by 0.007 at 1550 nm wavelength) than the refractive index of the SiO2 cladding material surrounding the core. Such waveguide can guide high fraction of optical mode field concentrated in the core area, when operated in the optical wavelength range around 1550 nm. The mode field diameter can be around 8.5 $\mu$m at 1550 nm wavelength. The practical power limit obtained from the above equation (4) can be 142 mW (21.4 dBm).

In other examples, the connector may comprise waveguide ends having fibers basically made of silica or doped silica, and wherein hollow tubes are included to lower the refractive index effectively seen by the optical wave. Such waveguide ends can be used in arrangement according to invention. The MFD of this waveguide type shows little variation with wavelength so related thereto stronger dependence of AEE on wavelength.

As indicated above, an arrangement according to invention may comprise a connector with several waveguide ends. The optical waveguides ending in the connector according to invention can be part of a fiber ribbon. An array of optical waveguides can be optical fiber waveguides embedded in grooves of a planar substrate. Or, the array of optical waveguides can be stripes on a planar substrate. A planar substrate carrying optical waveguides can be made of indium phosphide (InP), silicon (Si) or Polymethylmethacrylat (PMMA), for example.

Alternatively, the waveguides ending in the connector according to invention can be realized by a fiber containing several waveguide cores. Such fiber type is called multi-core fiber (MFC). Again, the fiber can consist of silica with doping to raise and/or lower refractive index or can contain areas with hollow tubes to lower refractive index to provide wave guiding.

A minimum of optical attenuation can be found in optical waveguide made of silica in the wavelength range 1650 to 1400 nm. Optical amplification in silica can be established in this wavelength range by optical pumping at 13 THz offset frequency to exploit Raman effect. Optical amplification in rare earth doped silica can be established in the range around 1550 nm by optical pumping at 1480 nm or 980 nm.

Transmission systems in optical L-, C- S- and E-bands can take advantage of these material properties. A preferred embodiment of the invention can use a transmission band including the wavelength 1550 nm.

The properties of material used in an optical waveguide can change when being exposed by light used for transmission. The effect of these so-called non-linear optical material properties on transmission increases with optical intensity in the waveguide. The optical intensity increases with decreasing area filled by the mode field when travelling along the waveguide axis. Therefore, the effective area filled a mode is an important parameter for the characterization of the optical mode in a waveguide.

As explained above, key parameter for the characterization of the optical mode in such fiber is the mode field diameter of the optical waveguide. The mode field diameter can preferentially be defined following the recommendation ITU-T G.650.1 (03/2018). With target mode field diameter given, the design rule and waveguide end manufacturing procedure can be derived in dependence on optical waveguide type used for arrangements according to invention.

The optical waveguide may end with a mode field diameter amounting to a few optical wavelengths, only, and may exhibit the low AEE targeted for cabling system according to invention. The waveguide can have single mode per polarization direction in the wavelength range used for transmission, but single mode operation is not a strict requirement in the short waveguide section leading to the waveguide end in the connector.

Optical transmission systems can use optical waveguides having essential circular cross section of core area and of the transverse extent of the electromagnetic field intensity of the mode. The transmission of power can be mainly in the fiber core. The power distribution can extend into the cladding and can be approximately Gaussian distributed. The mode field diameter can be abbreviated by MFD.

Fiber turns can create so called macro bending loss. This loss increases with wavelength. It can become noticeable at a threshold wavelength, beyond which it can increase exponentially with wavelength. Threshold wavelength and rate of increase can be influenced by fiber waveguide design. The macro bending loss can be specified for a given wavelength and number of fiber turns around a mandrel in dependence on mandrel radius.

For example, a widely used optical fiber waveguide (Corning's standard single mode fiber) can be made of silica with radial refractive index step. The core diameter can be 8.2 $\mu$m and refractive index difference between core and cladding can be 0.0047 at 1550 nm wavelength. According to a data sheet of Corning a silica fiber waveguide can have MFD 10.4 $\mu$m +- 0.5 $\mu$m at wavelength 1550 nm, and 9.2 $\mu$m at 1310 nm. The waveguide can have single mode per polarization for wavelengths beyond 1260 nm. A maximum of macro bending loss < 0.1 dB at wavelength 1625 nm can be achieved for 100 fiber turns around a mandrel with 30 mm radius.

Fiber management system can benefit from more macro bend loss insensitive fiber, as recommended in ITU-T G.657 standard. Such fiber property can be achieved by less coupling to waveguide cladding modes with bending. Other fiber property such as chromatic dispersion coefficient and polarization mode dispersion (PMD) specifications can be compromised. An appropriate fiber waveguide can have smaller core diameter of 7.6 $\mu$m combined with higher refractive index step of 0.0055 at wavelength 1550 nm. According to a data sheet of Corning, a silica fiber waveguide can have an MFD of 9.6 $\mu$m +-0.5 $\mu$m at wavelength 1550 nm wavelength, and 8.4 $\mu$m at 1310 nm. Again, the waveguide can have single mode per polarization for wavelengths beyond 1260 nm. The quoted maximum of macro bending loss < 0.1 dB at wavelength 1625 nm can be specified for much lower mandrel radius.

Upper borders of the two fiber groups commonly used for optical cabling seem to be 10.9 $\mu$m and 10.4 $\mu$m. The MFD ranges of the two fiber groups have overlap, in order to maintain compatibility with respect to equipment practice. A lower border for MFD of the two fiber groups commonly used for optical cabling seem to be 9.1 $\mu$m at 1550 nm wavelength.

In an embodiment, the use of fiber waveguide end MFD not higher than 9 $\mu$m at 1550 nm wavelength can help to lower the risk for human injury at locations where multi-waveguide connections are accessible and may be opened.

An appropriate waveguide end in a multi-waveguide connector according to invention can be made from OFS' TrueWave RS Low Water Peak Fiber, which has MFD in the range 8.4 $\mu$m +-0.6 $\mu$m at wavelength 1550 nm.

Other waveguide designs are also possible. A waveguide end with MFD of about 8.4 $\mu$m at 1550 nm wavelength can be achieved with a waveguide having refractive index step between core and cladding material of 0.0075 at wavelength 1550 nm and a core diameter of 7.0 um, for example. Fiber cutoff wavelength is about 1350 nm, which is somewhat higher than for the previous waveguide examples. A waveguide end with MFD of about 8.5 $\mu$m at wavelength 1550 nm can be also achieved by core diameter of 6.5 $\mu$m, as stated. Mode field has higher fraction in the cladding. Fiber cutoff wavelength is reduced to 1250 $\mu$m. The macro bend loss can be higher.

There are various low MFD waveguide types, which can be used in multi-waveguide end connector arrangements according to invention. For the purpose of description, optical waveguides can be grouped by maximum mode field diameter MFD_max at a specified wavelength. This is useful because different manufacturers can have different designs and manufacturing process of waveguides can cause spread in mode field diameter values.

The following table shows some common optical fiber types with a reduced mode field diameter that may be suitable for use in the plurality of optical transmission fibers 14a, 14b, 14c, with mode field diameter is essentially sorted by size.

Table 1

| optical fiber type | Comment | Mode field diameter @ 1550 nm | | |
|---|---|---|---|---|
| | | max | typ | min |
| *ofs* TrueWave® RS LWP | Full spectrum fiber with low loss in 1400 nm band, and low residual dispersion in C-band and L-band; ITU-T G.655.C/D compliant | 9.0 $\mu$m | | 7.8 $\mu$m |
| *Corning®* MetroCor® fiber | Full spectrum fiber NZDSFiber with moderate negative dispersion at 1550 nm wavelength, (discontinued) | 8.6 $\mu$m | | 7.6 $\mu$m |
| *NKT* LMA-8 | single-mode photonic crystal fiber, 8 $\mu$m silica core diameter | | 7.5 $\mu$m | |
| Rare-earth doped fiber | Erbium doped fiber amplifying in C-band when optically pumped at 1480 nm wavelength | | 5.5 $\mu$m | |
| Heavily oxide doped fiber | GeO$_2$ doped fiber for dispersion compensation in C-band | | 5 $\mu$m | |
| *NKT* LMA-5 | single-mode photonic crystal fiber, 5 $\mu$m silica core diameter | | 4.8 $\mu$m | |

According to Table 1, a large variety of optical fiber exist with a mode field diameter is smaller than waveguides typically used for single mode cabling systems.

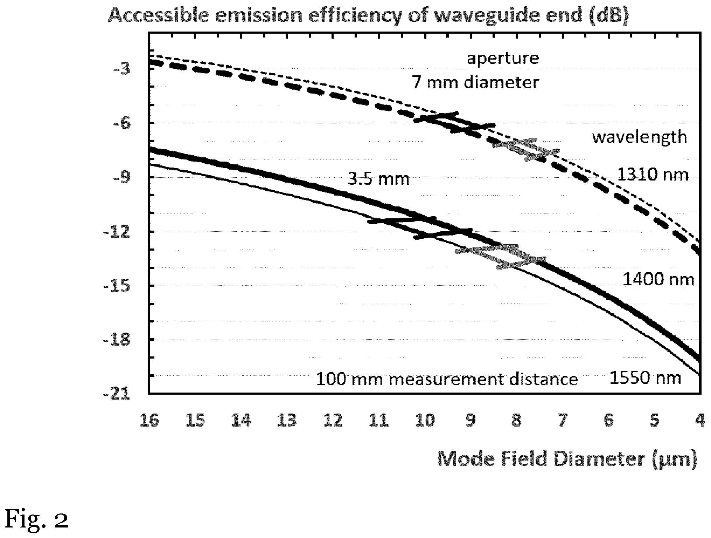

Fig. 2 shows the accessible emission efficiency of single mode waveguide end (AEE$_s$) versus mode field diameter for different wavelengths A and different diameters of measurement aperture $D_{as}$. The AEE$_s$ of a single waveguide in multi-waveguide end connectors used in cabling system according to invention is compared to AEE$_s$ of a waveguide end connector used in state-of-the-art cabling systems.

The diagram presents a calculation of the accessible emission efficiency AEE$_s$ of an optical waveguide end supporting optical mode with Gaussian intensity profile. As stated, the measurement arrangement and parameters are adopted from the referenced standard IEC 60825-2 and the normative references therein, including the following equation for the accessible emission efficiency:

$$AEE_s = 1 - \exp\left[-0.125\left(\frac{\pi\, d\, D_{as}}{\lambda\, l}\right)^2\right] \qquad (5)$$

where d denotes the mode field diameter, $D_{as}$ denotes the diameter of the aperture in front of the detector, $l$ denotes the distance between the waveguide end arrangement and the aperture stop, and $\lambda$ denotes the wavelength.

The expression in Eq. (5) is similar to the equation used in IEC 60825-2 Annex D.7 to calculate the maximum power during shutdown. As an example, $1/AEE_s = 13.64$ is obtained for MFD 11 $\mu$m at C-band wavelength 1550 nm, $D_{as}$ = 0,0035 m, $l$ = 0,1 m.

A measurement distance of 100 mm may be used; a circular aperture stop with diameter 7 mm may be used to take into account retinal hazards. The $AEE_s$ with 7 mm aperture is shown for the wavelengths 1310 nm and 1400 nm. These wavelengths are within the range used for optical fiber-based communication. As an example, the ITU-T G.56x standard series specifies single mode fibers for wavelengths 1260 nm and longer and specifies fiber data at 1310 nm. The referenced IEC 60825-2 standard recommends precautions against retinal hazards for wavelengths up to 1400 nm. A coarse Wavelength Division Multiplex systems can use wavelength bands extending from 1260 nm to 1620 nm.

A circular aperture stop with diameter 3.5 mm may be used for assessing skin and eye cornea hazards. The $AEE_s$ with 3.5 mm aperture is shown for the wavelength 1400 nm and 1550 nm. These wavelengths are within the range used for optical fiber-based communication. As an example, the referenced ITU-T G.56x standard series specifies single mode fibers for the wavelength 1550 nm. The referenced IEC 60825-x standard points to skin and cornea hazards for wavelengths of 1400 nm and above. A Dense Wavelength Division Multiplex systems can use wavelength bands extending from 1520 nm to 1620 nm and beyond.

Fig. 2 shows a value range for silica fiber with MFD 10.4 $\mu$m +-0.5 $\mu$m at 1550 nm wavelength (similar to Corning's standard single mode fiber) used in state-of-the art cabling system. The $AEE_s$ related thereto can be as high as 7.2 % (-11.43 dB) at 1550 nm wavelength.

Fig. 2 further shows a value range of silica fiber which can be used with advantage in a cabling system according to an embodiment. It has a MFD not higher than 9 $\mu$m at 1.55 $\mu$m wavelength and related thereto an $AEE_s$ per waveguide end not higher than 5 % (-13.04 dB) at 1550 nm wavelength. The $AEE_s$ per waveguide end can be lowered by 1.6 dB = -11.43 dB to -11.43 dB. This shows that arrangements according to the invention can help to lower the risk of human injury.

Analysis of optical loss at the border between cabling system according to an embodiment and according to the state of the art can be made. Butt coupling of waveguide ends with MFD 10.4 $\mu$m and 8.4 $\mu$m at 1550 nm gives 0.2 dB extra loss under ideal conditions of no radial offset and no tilt, as well as for radial offset of 1 $\mu$m and tilt of 1 degree, for example. Butt coupling of waveguide ends at the border of tolerance with MFD 10.9 $\mu$m and 7.8 $\mu$m at 1550 nm gives 0.5 dB extra loss under ideal conditions of no radial offset and no tilt, as well as for radial offset of 1 $\mu$m and tilt of 1 degree, for example. The extra loss of 0.2 dB to 0.5 dB is astoundingly small compared to the lowering of the accessible emission efficiency of 1.6 dB.

At the border between cabling system according to the invention and state-of-the-art cabling system optical loss can occur. Arrangement for adapting mode fields can be used to reduce insertion loss due to mode field mismatch. The adaptation can be done by various means. As an example, a waveguide section with intermediated mode field diameter can be spliced in. Alternatively or additionally, waveguide tapers can be used.

Waveguide tapers can change the refractive index profiles in the waveguide cross-sections along the waveguide axis and thereby change the modal field distribution along the waveguide axis. Hence, waveguide tapers can reduce the mismatch of the modal field distributions at waveguide end junction.

Fiber waveguides and fused fiber waveguide end junction can have tapered waveguide sections. Suitable methods to realize tapered fiber waveguides are (1) tapering the core diameter by drawing (down-taper), (2) tapering a preform (up-taper) and (3) diffusion of doped atoms in a single mode fiber by heat treatment. Tapers for mode field transformation can also provide some mode filtering. In the case of several emitting waveguide ends, the radiation of the individual terminations superimposes.

The techniques of the present disclosure can be used at wavelengths 1400 nm and higher, where skin and cornea hazards dominate according to standard IEC 60825-2 and the references given therein. A multi-fiber connector according to an embodiment can be used for optical wavelength bands using wavelength 1400 nm and higher. Following this standard and the standard series ITU-T G.65x the specification is done for 1550 nm wavelength in the first place. The analysis uses mainly the optical C band (about 1525 - 1565 nm). Other transmission bands such as L-band (about 1565 - 1625 nm) and S-Band (about 1460 - 1530 nm) can be analysed and used in a similar way.

The E-band (about 1360 -1460 nm), O-band (about 1260 - 1360 nm) or 850 nm band can also be considered, but may require adaptation of the test arrangement and procedure. As a first step, the accessible emission efficiency per waveguide end AEE$_s$ is plotted for aperture diameter 7 mm.

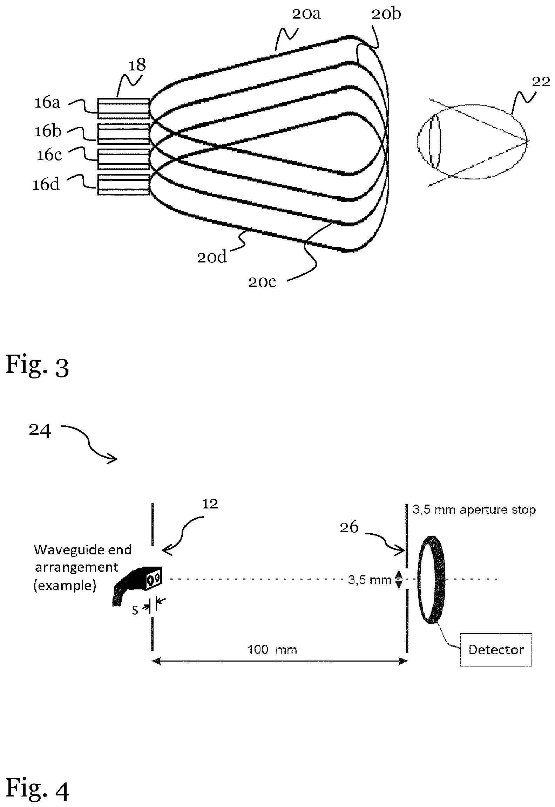

The calculation of the accessible emission efficiency of the whole multi-waveguide connector arrangement (AEE) has to take into account the individual spatial arrangement of the waveguide ends. An example for such a configuration is illustrated in Fig. 3.

In the schematic illustration of Fig. 3, a connector interface 18 comprises four connector elements 16a, 16b, 16c, 16d whose power density distributions 20a, 20b, 20c, 20d overlap at the location of a human eye 22.

Fig. 4 shows a test configuration 24 for determining the maximum accessible emission of an open multi-waveguide connector 12 according to an embodiment. The arrangement follows the recommendations of IEC 60825-2 and the references therein for hazard level 1M. The individual entities are not drawn to scale for the purpose of better illustration. An aperture stop 26 with 3.5 mm diameter is placed 100 mm apart from the open connector. The test wavelength is 1550 nm. For the test, the aperture stop and detector arrangement are moved relative to the waveguide end arrangement to determine the location of maximum efficiency for collection of accessible emission. The connector arrangement can have two waveguide ends with spacing S. In general, the waveguide ends can have different spacing. They can have different mode field diameter. They can be tilted with respect to the waveguide axis. The waveguide ends can have different tilt direction or angle. They can have different level of emitted power, e.g. the waveguide end with lower MFD can emit higher power. In Fig. 4, the spacing S is highlighted by lines and arrows with letter S in between. Thicker circle line corresponds to lower mode field diameter. Circle line bossing corresponds to tilt in the direction of bossing in a way that at the waveguide extends further along its axis at the side of bossing. A dot in the inner circle of a waveguide end corresponds to lower power emitted from the waveguide end with respect to the other waveguide end. The connector is at the end of a cable with two fiber waveguides.

A pin hole aperture stop diameter 3.5 mm can be used for wavelength down to 1400 nm, diameter 7 mm can be used for wavelength below 1400 nm, according to the recommendation IEC 60825-2 and the references cited therein.

In a preferred arrangement there may be essentially no difference in tilt of the waveguide ends with respect to each other or even no tilt. They can have essentially equal mode field diameters at the waveguide ends, i. e. belong to a group with same MFD_max at 1550 nm wavelength. The waveguide end to waveguide end spacing S can be varied in the range from several mode field diameters to keep optical coupling low (e. g. greater about 20 $\mu$m for MFD = 4 $\mu$m) to several millimeters to spatially separate the beams on the skin or cornea to some extent (e. g. 6 mm for MFD = 9 $\mu$m). Setting equal power levels in the two waveguides is a conservative approach for the arrangement under analysis. The two radiating waveguide ends may be modelled as Gaussian beams sources at the locations as shown. The analysis procedure in the wavelength range beyond 1400 nm is to determine at a distance of 100 mm from the waveguide end arrangement with an aperture stop of 3.5 mm diameter the limit of power radiated from the waveguides for not surpassing 10 mW power passing the aperture stop. The hazard power analysis follows in this respect the recommendations of IEC 60825-2 for hazard level 1M.

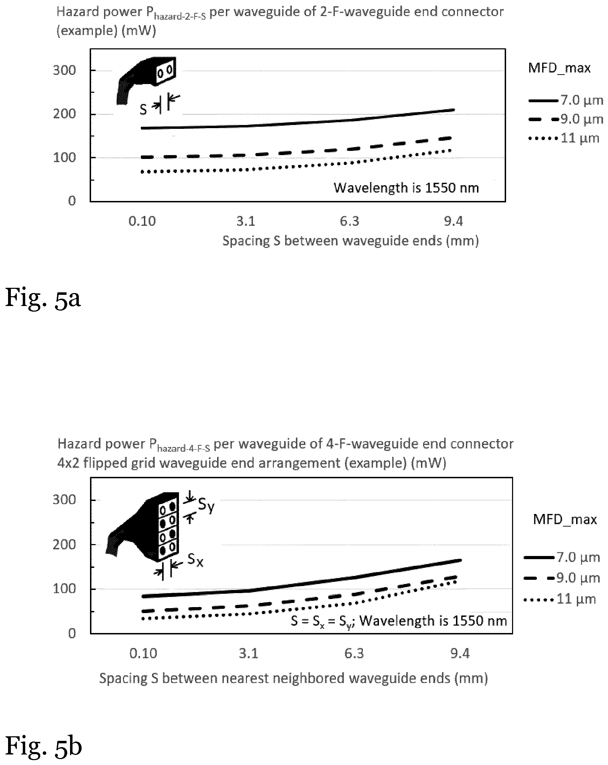

Fig. 5a shows the hazard power per waveguide of a 2-F- waveguide and connector example, wherein both emit at 1550 nm wavelength and together create 10mW after passing through the aperture stop with 3.5 mm diameter, versus the spacing between the waveguide ends, for three different mode field diameters 7.0 $\mu$m, 9.0 $\mu$m, 11 $\mu$m.

The corresponding results are shown in the following table:

Table 2

| Waveguide end MFD_max @ 1550 nm | Hazard power P_hazard-2-F-S per waveguide at 1550 nm wavelength in 2-F- waveguide end connector (example) (mW) | | | |
|---|---|---|---|---|
| 7.0 $\mu$m | 168 | 173 | 186 | 210 |
| 9.0 $\mu$m | 102 | 106 | 120 | 147 |
| 11 $\mu$m | 68.2 | 72.5 | 87.0 | 118 |
| Waveguide end spacing S (mm) | 0.10 | 3.1 | 6.3 | 9.4 |

As can be seen from Fig. 5a and Table 2, the power per waveguide increases with decreasing MFD and increasing spacing S. With decreasing spacing S, the power per waveguide approaches the power of a single-waveguide connector divided by the number of emitting waveguide ends. With increasing spacing S, the power per waveguide approaches the power of a single-waveguide connector.

The use of medium MFD_max waveguide ends (e.g. 9 $\mu$m) with small spacing (0.05...3.1 mm can give a compact twin-waveguide connector design together with power per waveguide beyond 100 mW per waveguide end.

The combination of very low MFD_max waveguide ends (e.g. 7 $\mu$m) and medium spacing S (3.1 mm) can give a compact multi-waveguide connector design together with very high power limit well above 100 mW per waveguide end.

The target of such two-waveguide connector according to the invention can also be to operate one waveguide as nominal output waveguide with power levels commonly used in DWDM network elements, e.g. up to 125 mW (21 dBm) at around 1.55 $\mu$m wavelength and the other as nominal input waveguide with negligible output power. But for some use case upcoming over time (e.g. CWDM overlay network) or because of a system error, the nominal input waveguide end can exhibit output power which has to be accounted for if the connection is open. Twin waveguide connectors according to the invention add power margin to accommodate with such challenges.

With growth of cabling in data centres, multi-waveguide connectors with higher number of waveguide ends came in use. Multi waveguide connectors can have waveguide to waveguide spacing of a few 10 $\mu$m (e.g. multi core fiber ending in a connector). Multi waveguide connectors can have waveguide to waveguide spacing 50 to 250 $\mu$m. The Multi-fiber Push-On (MPO) connector or MTP® brand MPO-style connector of company US Conec is of this type, for example. Recently SN® brand connector with 3.1 mm fiber to fiber spacing has been introduced by Senko. It is a twin waveguide connector. Grouping of four twin-waveguide connectors to a common connector arrangement is demonstrated. Also, a CS® brand connector with 3.8 mm fiber spacing of company Senko is available. It is a twin waveguide connector, also. Grouping of several of these connectors has been demonstrated. A LC duplex connectors with 6.25 mm fiber waveguide end spacing has been known since for a long time. Connectors with more than two waveguide ends can also be used with low MFD_max waveguides.

The diagram of Fig. 5b generally corresponds to Fig. 5a, but for the multi-fiber connector described above with reference to Fig. 1b, with eight connector elements arranged as a 4x2 flipped grid waveguide. The illustrated waveguide end arrangement is part of a connector consisting of four subassemblies with two waveguide ends, each, whereby one waveguide per subassembly is emitting. The connector can be at the end of a cable with eight-waveguides, as shown, or can be at the end of four cables each carrying two waveguides. Again, the spacing between directly neighbored waveguide ends S is varied in the range several 10 $\mu$m to several mm. The four radiating waveguide ends are modelled as Gaussian beams sources at the shown locations. The analysis procedure is again at 1550 nm wavelength. Target is to determine at a distance of 100 mm from the waveguide end arrangement with an aperture stop of 3.5 mm diameter the limits of powers in the four waveguides for not surpassing 10 mW power passing the aperture stop. In this example, we assume that $S_x$ and $S_y$ coincide.

The results are summarized in Table 3:

Table 3

| Waveguide end MFD_max @ 1550 nm | Hazard power P_hazard-4-F-S per waveguide at 1550 nm wavelength in 4x2 flipped grid 4-F-waveguide end connector (example) (mW) | | | |
|---|---|---|---|---|
| 7.0 $\mu$m | 84.2 | 96.7 | 126 | 164 |
| 9.0 $\mu$m | 51.0 | 62.9 | 88.8 | 129 |
| 11 $\mu$m | 34.1 | 45.6 | 69.3 | 118 |
| Waveguide end spacing S (mm) | 0.10 | 3.1 | 6.3 | 9.4 |

Again, the power per waveguide increases with decreasing MFD and increasing spacing S. For very small spacing S (several mode field diameters, e.g. S = 70 to 250 $\mu$m), the power per waveguide corresponds to the power of a single waveguide detector divided by the number of emitting waveguide ends (here N = 4). Flipping of waveguide ends is not effective for such narrow spacing. With increasing spacing S, the power per waveguide increases, which higher slope compared to the twin waveguide connector arrangement.

In summary, the use of medium MFD_max waveguide ends (e.g. 9 $\mu$m) with small spacing (0.05 ...3.1 mm) can give a compact twin-waveguide connector design together with power per waveguide beyond 50 mW waveguide end.

The combination of very small MFD waveguide ends (e.g. 7 $\mu$m) and very small spacing to small spacing S can give a compact multi-waveguide connector design together with high power limit approaching 100 mW per waveguide end.

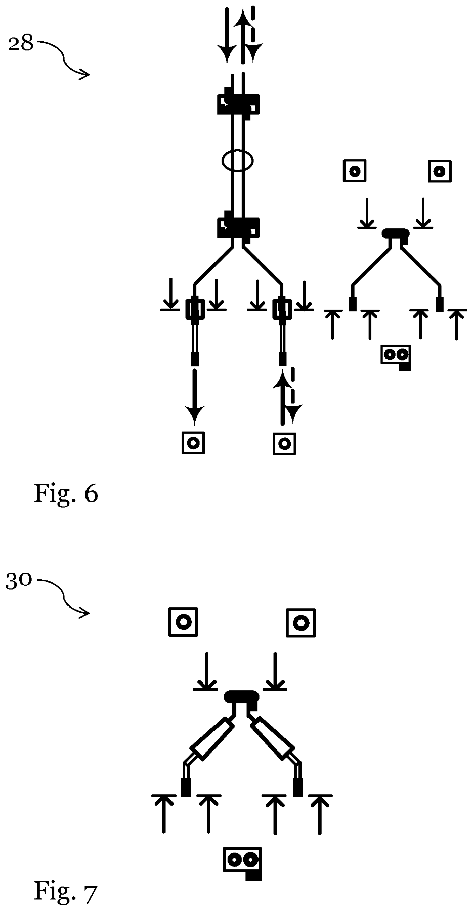

Fig. 6 schematically illustrates an optical communication system 28 employing a plurality of multi-fiber connectors 12 according to an embodiment. The optical communication system 28 employs a breakout cable, and at ist common side an optical connection of its multi-waveguide and connector to another multi-waveguide and connector and patch code via an adapter. At the tributary side of the breakout cable connection to patch cords with single waveguide end connector is shown.

Single line between multi waveguide end connector and single waveguide end connector in the breakout cable illustrate waveguide section with small mode field diameter. Double line between single waveguide-end connectors of the attached patchcord illustrate section of waveguide with larger mode field diameter. A front view of the waveguide end is given at the bottom of the drawing. The circle illustrates the size of the mode field diameter. The solid arrows illustrate directions of nominal power flow. The dash line arrow illustrates direction of potential contra-directional power flow.

The right-hand side insert shows a detail of the arrangement to guide the eye to the waveguide and front views illustrating the mode field diameter differences between the waveguide section in the breakout cable and the attached patchcord with single waveguide end connectors.

On the common side is a multi waveguide end connector with at least one waveguide end having mode field diameter not higher than 9 $\mu$m at 1550 nm wavelength. A waveguide type with MFD in the range 9 $\mu$m to about 8 $\mu$m is a reasonable choice. To be specific, the waveguide end in the multi-waveguide connector can be made from OFS' TrueWave RS Low Water Peak Fiber, which has MFD in the range 8.4 $\mu$m +- 0.6 $\mu$m at wavelength 1550 nm. Other waveguide designs are also possible, as already explained above.

The number of waveguides in the breakout cable is kept as low as possible for the purpose of illustration of the disclosure. For example, the multi waveguide end connector at the common side can be of MPO type with at least 8 waveguides ending there. The breakout cable is terminated on the tributary side by connectors containing single waveguide end. For the twin waveguide end connector as shown, the spacing between the waveguide ends is not larger than 4 mm. The multi-waveguide end connector has a key arrangement which matches the complementary slit or groove arrangement in the adapter used for plugging.

On the common side connection to another multi-waveguide end connector is shown. Fiber pigtails are shown in conjunction with this other connector. It can be part of circuit pack or other patch cord, for example. The multi-waveguide end connector of the breakout cable and the multi-waveguide end connector with pigtails are plugged together via an adapter for multi waveguide end connector pair. The keys of the multi-waveguide connectors and their groove or slit type counterparts in the adapter are illustrated, also. The keys match their counter parts in the adapter for the multi waveguide end connector pair.

On the tributary side patch cords with single waveguide end connector are shown. A single waveguide end connector of the breakout cable and a single waveguide end connector of the patch cord are connected via an adapter for single waveguide end connector pair. The waveguide ends in the patch cords with single waveguide end connector have MFD higher than 9 $\mu$m at 1550 nm wavelength, which is at least partly compatible with state-of-the-art cabling systems, which have been presented above.

The waveguide end in the multi-waveguide end connector can be made from OFS' TrueWave RS Low Water Peak Fiber, which has MFD in the range 8.4 $\mu$m +- 0.6 $\mu$m at wavelength 1550 nm. Other waveguide designs are also possible, as already explained above.

Fig. 6 illustrates that these patch cords and the patch cord of the breakout cable can have the different waveguides and related thereto waveguide ends. Butt coupling of these waveguide ends can create extra loss.

The loss for butt coupling has been analyzed in conjunction with calculation of the accessible emission efficiency per waveguide end $AEE_s$ shown in Fig. 2 and found to be astoundingly small compared to the lowering of the $AEE_s$. Nevertheless, it can be of interest to provide means to reduce the loss.

Fig. 7 shows a breakout cable 34 for use in an optical communication system according to an embodiment. The breakout cable 30 is similar to the breakout cable described above in the context of the optical communication system 28 of Fig. 6, but the mode field distribution may change the waveguide axis. For instance, different waveguide types can be used in the single waveguide end connector and in the multi-waveguide end connector. Thee waveguide types can differ in waveguide properties so that the mode field diameter is larger than the single waveguide end connector, as illustrated.

The waveguide ends can have connection to splices or taper and/or higher order mode filter transforming MFD. Mode filter for suppression of power in modes other than ground mode can be realized by fiber curls. Small MFD fiber is illustrated by line. Taper / mode filter is shown by trapezoidal block.

The waveguide transition can be established in different ways.

- The transition can be established via a splice between the two waveguide types. The splice loss can be smaller than the loss occurring at a connector junction.
- The transition can be established by splicing in a waveguide type with intermediate modal field distribution. E. g. the single waveguide end connector can employ a waveguide end with MFD of 10.4 $\mu$m +-0-5 $\mu$m as stated, and the multi-waveguide end connector can employ a waveguide end with MFD of 8.4 $\mu$m +- 0.6 $\mu$m as stated. An appropriate intermediate waveguide type can have a design value for MFD of about 9.35 $\mu$m = SQRT(10.4 * 8.4) $\mu$m. The low bend loss fiber type with MFD of 9.6 $\mu$m +-0.5 $\mu$m (e.g. *Corning* ClearCurve Low Bend Loss (LBL) fiber), which comes close to this design value.

The transition can be established by a waveguide taper, as described above.

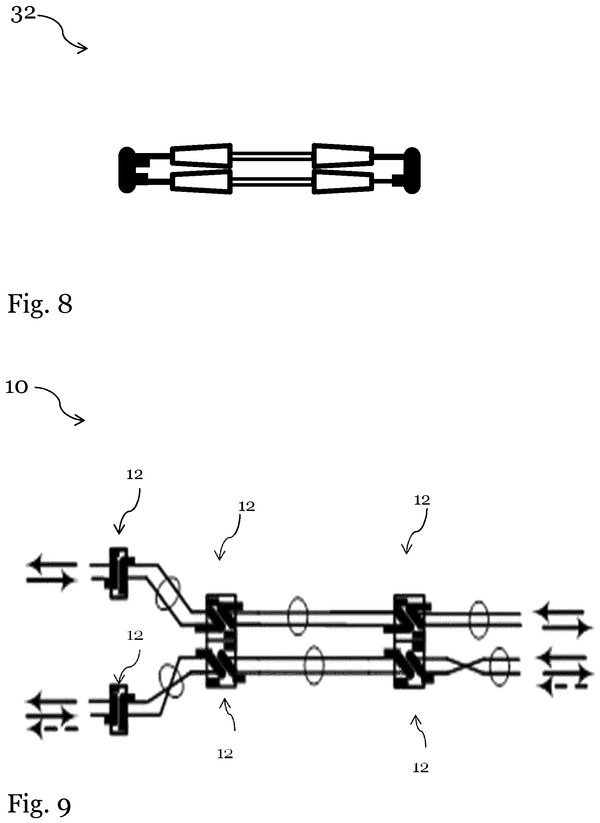

Fig. 8 is a schematic illustration of a patch cord 32 that may be used in an optical communication system according to an embodiment.

The waveguide ends can have connection to splices or taper and/or higher order mode filter transforming MFD. Mode filter for suppression of power in modes other than ground mode can be realized by fiber curls. Extra small MFD fiber is illustrated by thin line. Taper / mode filter is shown by trapezoidal block. Low bend loss fiber (i.e. MFD 9.6 $\mu$m at 1550 nm wavelength) is shown by double-line. Connector on opposite of extra small MFD fiber can be marked or have special key to signal that that it is high power cable., Marking is illustrated by two solid rectangles. The marking is optional. Known means for marking are special color, engraving, mechanical shape or labelling. Extra small MFD can be 8 $\mu$m at 1550 nm wavelength, for example.

Fig. 9 shows an optical communication system 10 comprising a breakout cable and a plurality of multi-fiber connectors 12 at both ends, according to an embodiment. Fig. 9 shows a 2x2 flipped grid 2-(emitting)F(iber)-connector arrangement. The number of waveguides in the breakout cable is limited to four for the purpose of illustration. The breakout cable is terminated on one end by a multi-waveguide end connector arrangement comprising N arrayed-waveguide end connector sub-assemblies housed in adapter. Directly neighbored arrayed-waveguide end connector sub-assemblies are flipped with respect to each other, as shown. Hence, it can be avoided that next neighbor waveguide ends emit nominal output waveguides. This measure advantageously lowers the accessible emission efficiency of the connector arrangement AEE. Such N pairwise flipped arrayed waveguide end connector sub-assemblies can be denoted as NxM flipped grid L(emitting)-F(iber)-connector arrangement according to a terminology already used above. The flipping of the arrayed waveguide end connector sub-assemblies can be made possible by an appropriate adapter, which allows sliding in the keys of the arrayed-waveguide end connector sub-assembly in flipped position.

In configurations according to an embodiment, an adapter can be used to advantageously lower the accessible emission efficiency of the multi-waveguide-end connector. Thus, the level of accessible emission can be lowered and the risk for human injury can be lowered.

On the other ends of the breakout cable can be arrayed waveguide end connector sub-assemblies, also. On either end of the breakout cable are shown multi-waveguide end connectors with fiber pig tails, which can be part of circuit packs or other patch cords.

For example, directly neighbored waveguide ends in the arrayed waveguide end connector subassembly can have 3.1 mm spacing. This is the case for SN® type connector, for example. Additionally, neighboring twin connector arrangements can be flipped by using an adapter according to an embodiment. Additionally, the multi waveguide end connectors can use waveguide ends with low MFD_max of 9 $\mu$m (e.g. ofs truewave® RS fiber).

All these measures lower the accessible emission efficiency of the connector arrangement AEE compared to state of the art MPO /MTP® type connector arrangement.

Thus, bidirectionally operated fiber pairs can have be operated at comparably high power level and with margin for residual contra-directional power flow in nominal input fibers, for example.

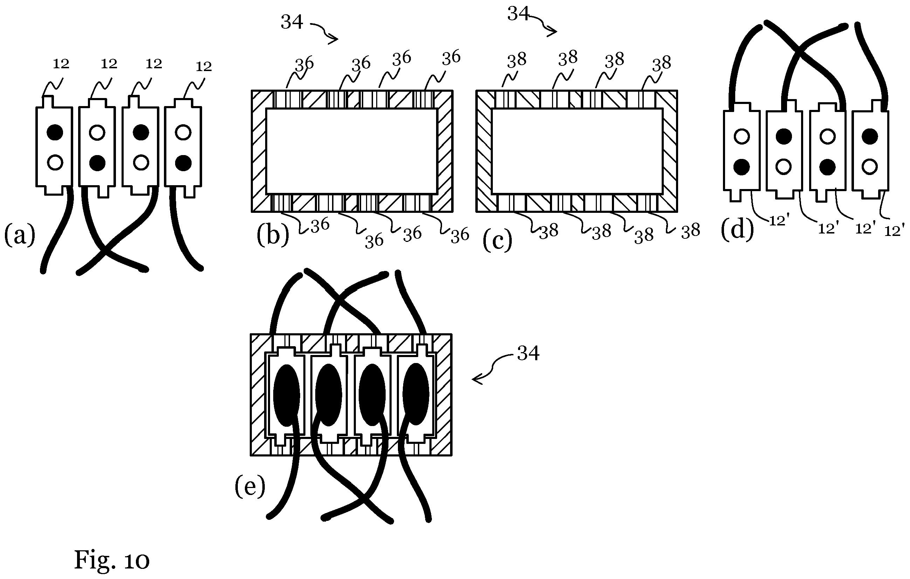

Fig. 10 schematically illustrates in greater detail a 4 x 2 flipped grid 4-F connector similarly to the one discussed above with reference to Fig. 5b and Table 3. Fig. 10a is a schematic front view of four twin connectors 12 being flipped pairwise, wherein circles without filling denote nominal emitting output termination and circles with black filling denote nominal input termination, considered not emitting.

Fig. 10b is a schematic front view of an adapter 34, having slits 36 arranged and positioned such that the keys of the connectors 12 can slide in.

Fig. 10c is a schematic rearview of the adapter 34, having slits 38 arranged such that keys of four further pairwise flipped twin connectors 13, as illustrated in Fig. 10d can slide in.

Fig. 10e is a schematic frontview of the adapter 34 with the four twin connectors 12 being pairwise flipped and being plugged in from the front and with the four further twin connectors 12' according to Fig. 10d being plugged in from the rear.

Table 3 presents results of the calculation of the hazard power P_hazard-4-F-S at 1550 nm wavelength for such an eight-waveguide end connector having four waveguide ends in flipped position emitting with equal power. Horizontal and vertical waveguide end spacings are taken equal. For waveguide ends with MFD 9 $\mu$m at 1550 nm wavelength and nearest waveguide end spacing 3.1 mm, a hazard power per waveguide end of 62.9 mW can be read from the table. This corresponds to an accessible emission efficiency of the whole connector AEE of 4 % = 10 mW /4/62.9 mW (-14 dB).

A connection arrangement according to an embodiment can use four twin-waveguide end SN® type connectors placed in an adapter according to invention, which enforces flipping of directly neighbored SN® type connectors. The waveguide ends of each twin-waveguide connector have a spacing of 3.1 mm. Waveguide ends of neighboring twin waveguide end connectors are further apart. The calculation has assumed same spacing. Thus, the quoted AEE of 4 % can be taken as result of a calculation with conservative assumptions. For comparison, a state-of-the-art connector with single waveguide end having at wavelength 1550 nm an MFD of 10.9 $\mu$m has an AEE of 7.2 %. Hence, the connector arrangement according to the embodiment is more effective when a low AEE is targeted.

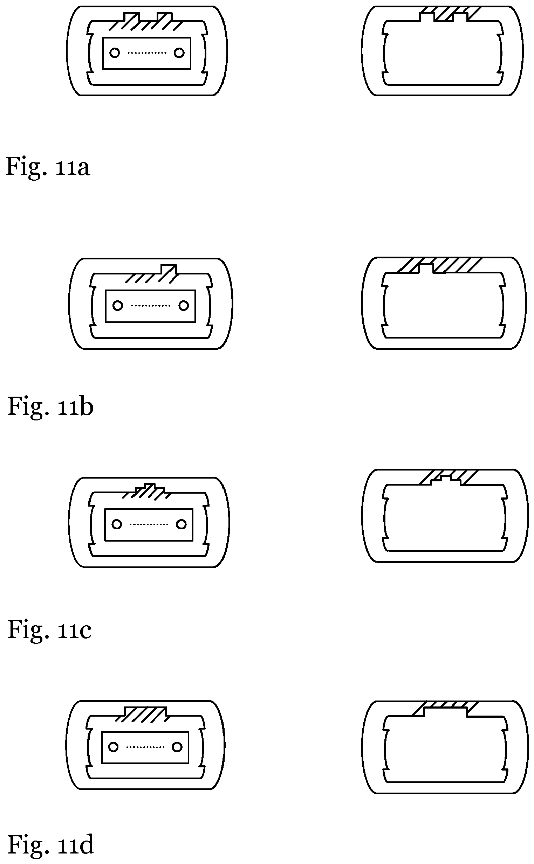

Fig. 11a to Fig. 11d schematically illustrate different connector application examples, wherein the drawings on the left-hand side of each of Fig. 11a - 11d illustrate a multi-waveguide connector end views and the drawings on the right-hand side of each of Fig. 11a - 11d show matching adapter end views. As can be taken from these Figures, the connectors and adapters may have corresponding key and lock shapes.

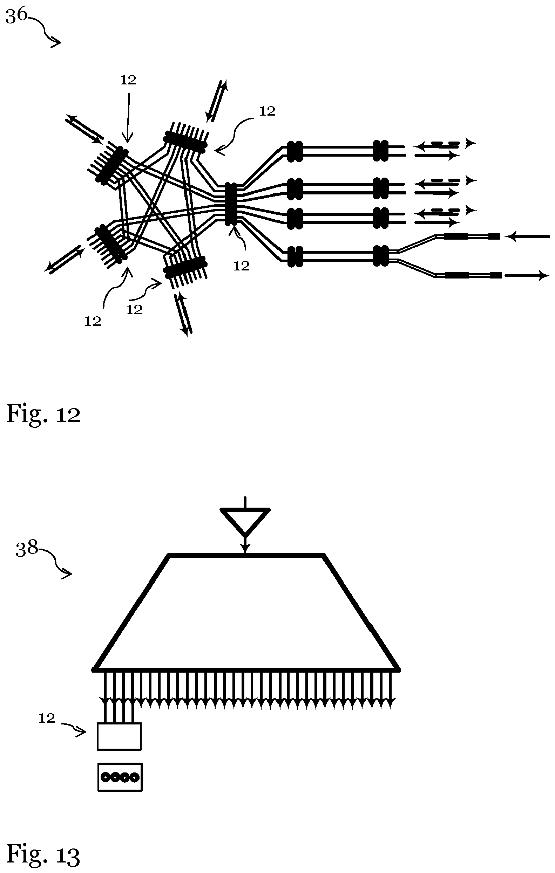

Fig. 12 shows an optical waveguide shuffle 36, which can interconnect five circuit packs via multi-fiber connectors 12 according to invention. The connectors 12 can each have eight waveguide ends in use. The waveguide ends have low mode field diameter. Thus, the output power of a given connector can be higher. The waveguide ends in the shuffle connectors can have a maximum MFD of 8.6 $\mu$m (Corning MetroCor), or lower.

MPO connectors according to an embodiment can be employed, as illustrated. Alternatively, a set of four SN® connector set as shown in Fig. 10 may be used, or a a set of four CS® connectors as described above with reference to Fig. 1b. An optical waveguide shuffle can have the connectors arranged in adapters at a panel aka a face plate. An optical waveguide shuffle can be arranged in a box having cables ending in connectors.

Fig. 13 is a schematic illustration of an amplifier 39 with an output port comprising a multi-fiber connector 12 according to an embodiment.

The demultiplexer can separate incoming set of spectral slices of the DWDM signal into spectral slice subsets and feed the separated subsets into different tributary optical waveguides. The waveguides can end in connectors 12. Subsets of the tributary optical waveguides can end in connectors 12 with several waveguide ends according to an embodiment, as shown.

The combined power of the waveguide ends of the multi-waveguide connector 12 can be much higher than the power per waveguide. It is of advantage to use a multi waveguide end connector according to an embodiment with low AEE.

The optical amplifier 39 can have an arrangement to limit the optical output power to absolute maximum power and amplification of absolute maximum gain. The optical demultiplexer can have a guaranteed minimum insertion loss by design or by splicing in an optical attenuator where needed. The optical amplifier and optical demultiplexer can be coordinated such that in such spectral slice subset associated with such multi-waveguide and connector the combined maximum power P_hazard is not exceeded in case an accessible connection is opened.

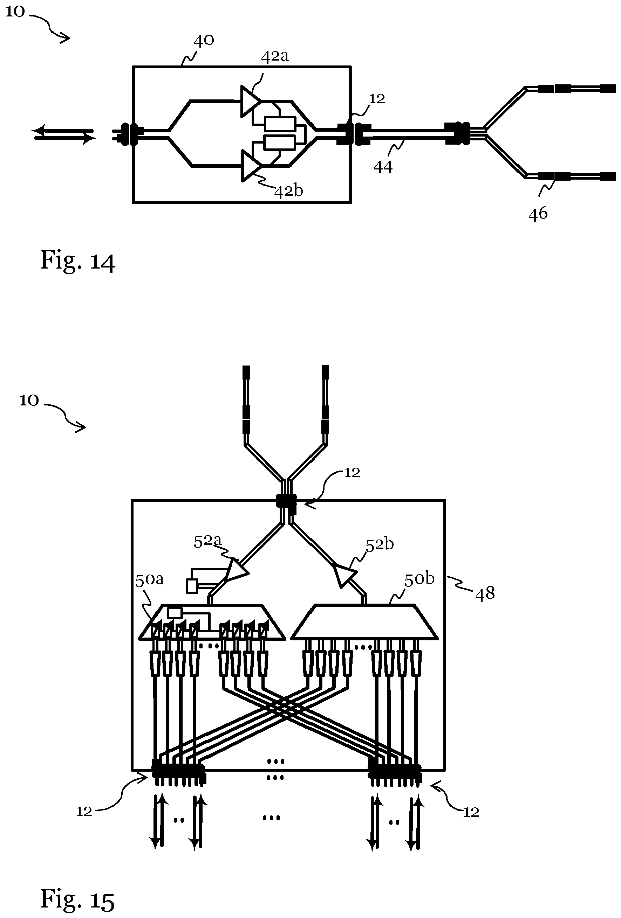

Fig. 14 is a schematic illustration of an optical communication system 10 comprising a circuit pack 40 with two amplifiers 42a, 42b. The amplifiers 42a, 42b may have individual output power control. A common control can be activated by using a connection line the connections are shown without adapters, for the sake of clarity.

The amplifier output power may be essentially contained in the optical C-band. Each amplifier 42a, 42b has a control circuit, which can measure the output power of the amplifier 42a, 42b and feed a control signal to the amplifier 42a, 42b. The amplifier output signals are forwarded to a connector 12 containing two waveguide ends. The circuit pack output can be connected to a two-waveguide patch cord 44. The patch cord 44 can be connected to a breakout cable 46. The breakout cable 46 can employ single mode optical fibers. The single mode optical fibers may terminate in single-waveguide connectors. The single-waveguide connectors can employ single mode optical fiber with a mode field diameter MFD_smf_max not larger than 11 $\mu$m at wavelength 1550 nm. The MFD of the single-waveguide connector can be used as reference for the specification of the power limitation of the two-waveguide connector.

The control circuit of each amplifier 42a, 42b guarantees that the output power does not surpass an upper limit P_abs_max_single. This upper limit can be chosen such that an open single-waveguide connector produces in 10 cm distance a power not higher than 10 mW. The hazard power of state of the art fiber connector with waveguide end having 11 $\mu$m MFD at 1550 nm wavelength can be 136 mW according to the standard IEC 60825-2 and normative references therein. This single-waveguide connector, when opened, is relatively safe in that it can comply to hazard level 1M according to IEC 60825-2.

The configuration of Fig. 14 has accessible two-waveguide connections between the circuit pack 40 and the patch cord 44, and between the patch cord 44 and the breakout cable 46. The connection design can be such that an open connector with two waveguide ends radiating together up to two times the above mention hazard power can produce in 10 cm distance a power not higher than 10 mW. If the waveguide ends at the amplifiers outputs have MFD not higher than 7.7 $\mu$m, the hardware limitation of each amplifier 42a, 42b can be set such that 136 mW is not exceeded. State of the art is that the MDF is not low enough to operate the amplifiers individually up to the hazard power 136 mW.

If the MFD is 11 $\mu$m at 1550 nm, the amplifiers 42a, 42b can share power in a manner controlled by common output power control.

Fig. 15 shows an optical communication system 10 with a circuit pack 48 containing demultiplexing WSS and multiplexing WSS 50a, 50b, connected on common port side to amplifiers 52a, 52b. The circuit pack 48 has single-waveguide connectors 12 on the amplifier side. The circuit pack 48 has a multi-waveguide end connector on WSS common side and on WSSs tributary side, whereby both multiplexing WSS and demultiplexing WSS 50a, 50b can connect pairwise to a connector 12.

The configuration may comprise several tributary side multi-waveguide end connectors as shown, depending on the port count of the WSS modules and connectors.

The multi-waveguide connectors for the tributary path can have two ports. But they also can have more ports, e.g. eight ports as shown. On either end of the circuit pack are shown connectors with fiber pig tails, which can be part of circuit packs or other patch cords.

The tributary side multi-waveguide end connectors can employ single mode optical fiber waveguides having at wavelength 1550 nm an MFD of 8.6 $\mu$m. The fiber waveguide end spacing in the connector depends on connector type, e.g. 250 $\mu$m for a MPO type connector or 3.1 mm for a SN® type connector. The single-mode optical waveguides can be connected to the WSS port waveguides by splicing, connectors, or as illustrated via mode field tapers/ mode filters. According to the accessible emission efficiency Eq. (5), a total power up to 220 mW (23.4 dBm) at 1550 nm wavelength can travel in the 8.6 $\mu$m MFD waveguides coming from the demultiplexing WSS, if in 10 cm distance of an open connector a power not higher than 10 mW is tolerated in a 3.5 mm pinhole aperture stop. The WSSs can have an absolute minimum insertion loss for all possible configurations and wavelengths. The guaranteed minimum insertion loss level can be set by a control unit, which is illustrated.

Without the connection arrangement according to the embodiment and employing 11 $\mu$m MFD waveguide ends, no more than 136 mW (21.3 dB) could be tolerated in order to comply with IEC 60825-2 hazard level 1M. Therefore, the embodiment makes 2.1 dB = 23.4 - 21.3 dB more power available.

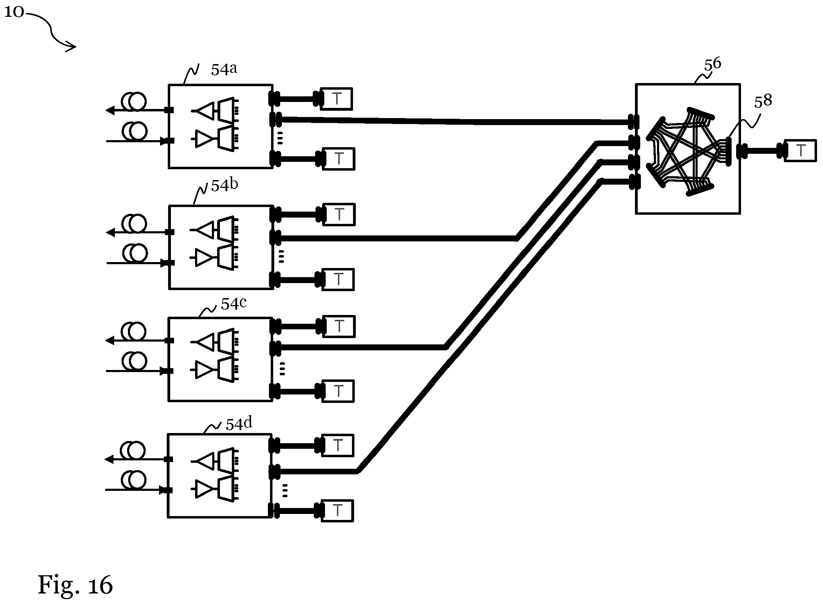

Fig. 16 is a schematic illustration of an optical communication system 10 comprising an interconnection of a plurality of WSS cards 54a - 54d to a waveguide shuffle 56. Each of the WSS cards 54a - 54d generally correspond to the configuration described above with reference to Fig. 15, whereas the waveguide shuffle 56 may generally correspond to the configuration described above with reference to Fig. 12.

Unused ports of the WSS cards 54a - 54 d can be connected via a patch cord to a circuit pack terminating all waveguide ends. The fifth shuffle port 58 on the right-hand side of the waveguide shuffle 56 may be terminated in the same way. The terminating circuit pack can comprise fixed attenuators, loop back fibers or test equipment. A shuffle connection can be accessible and may be opened intentionally or unintentionally at some point in time. An open shuffle connection can be fed by signals from up to four other shuffle ports. With reference to the figure, three WSS cards can route disjoint spectral parts of C-band to the fourth WSS card so that complete C-band signal set can arrive at the shuffle port dedicated to the fourth WSS card. The optical loss of connections according to an embodiment and a shuffle according to an embodiment can be very low, and may be neglected for the purpose of this analysis. For example, the shuffle port dedicated to the fourth WSS card may transport operationally up to 90 mW (19.5 dBm) toward the fourth WSS card. It cannot be excluded, however, that one of the three WSS cards is malfunctioning and sends additionally an absolute maximum power of 110 mW towards the shuffle. In this worse case scenario, when neglecting all residual optical losses 200 mW (23 dBm) can arrive at an open shuffle port. A multi-waveguide end connector arrangement according to an embodiment with MFD 9 $\mu$m at 1550 nm wavelength can maintain relative safety under the circumstances.

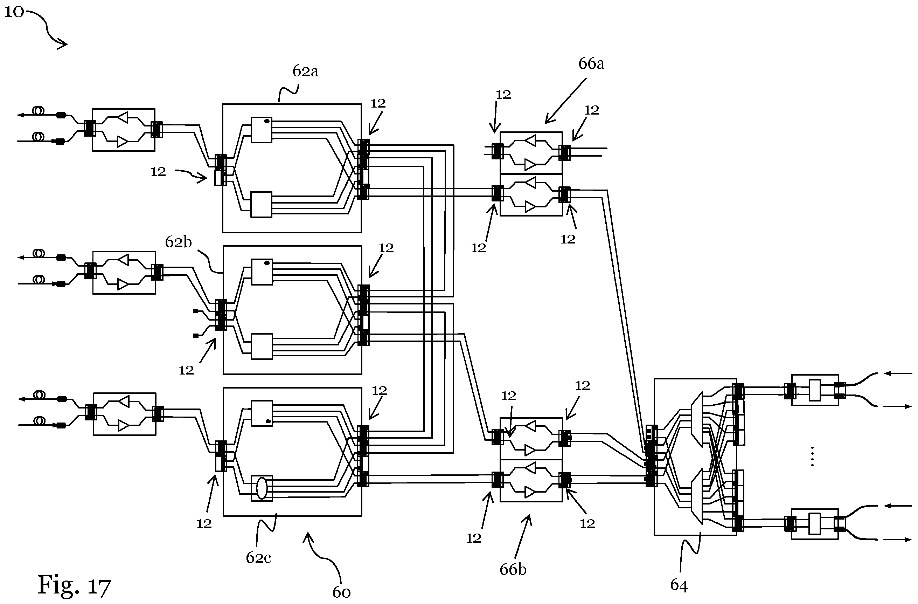

Fig. 17 illustrates an optical communication system 10 which uses optical connections via twin waveguide patch cords according to invention. The twin waveguides are position in groups. Pairwise flipping of connector subassemblies is applied.

The optical communication system 10 comprises a ROADM site 60 which can connect to three remote locations. The ROADM site 60 comprises three ROADM modules 62a, 62b, 62c, each being connected at the common side to transmission fibers via an amplifier pair. Ports for optical multiplex section protection are provided. Alternatively, the open ports at the common side of each ROADM module 62a, 62b, 62c can be connected to a transceiver useable for ROADM site cabling analysis. The ROADM modules 62a, 62b, 62c are interconnected, to exchange express line signals carried in and out on the transmission fibers. The ROADM modules 62a, 62b, 62c have connections to a multiplexer-demultiplexer arrangement 64 via add/drop amplifier pairs 66a, 66b, and further to transponder modules and fiber pairs connected thereto, to drop and add data signals coming in and going out via the transmission fibers that the ROADM module 62a, 62b, 62c is connected to.

The twin amplifier modules 66a, 66b each comprises two optical amplifiers. On both sides corresponding input and output ports of the amplifier pair can be grouped as shown in Fig. 17. Twin-waveguide end connectors 12 according to an embodiment can be made available at the amplifier module faceplate. The twin connectors 12 according to an embodiment can be in a twin connector adapter according to an embodiment.

A ROADM module 62a, 62b, 62c according to an embodiment can comprise wavelength selective switching devices. The displayed module 62a, 62b, 62c comprises two wavelength selective switches, by way of example. But other optical modules can be included and alternatively be used as well, such as an optical coupler, optical filter, wavelength blocker array or MxN WSS. Corresponding input and output ports of the ROADM modules 62a, 62b, 62c can be grouped in pairs, as shown. Twin-waveguide connectors 12 can be made available at the ROADM module faceplate for the two common ports pairs and the tributary port pairs. Twin connectors according to an embodiment can be provided in a twin connector adapter according to an embodiment.

The add/drop module 64 can comprise means for optical multiplexing or combining and distributing or broadcasting. It can comprise further devices for optical selecting or collecting, and demultiplexing or broadcasting. Star coupler, optical filter, NxM WSS, multicast switch or wavelength blocker arrays can be used for realizing these functionalities. The tributary input ports and output ports of these devices can be made available at the multiplexer module-demultiplexer face plate via connector arrangements according to an embodiment

A twin connector adapter according to an embodiment can be selective with respect to low emission efficiency connectors. This adapter can be used to set up a cabling arrangement which can apply the higher hazard power of 204 mW for the single waveguide end in the twin waveguide end connector according to invention. Use of an adapter is illustrated in Fig. 17 for the interconnection between the add/drop amplifier module and the ROADM module.

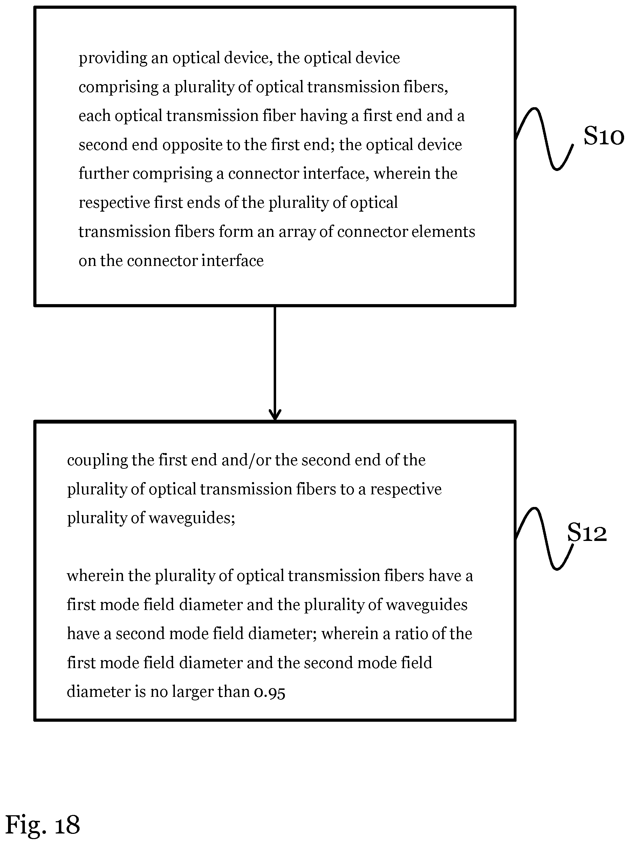

Fig. 18 is a flow diagram illustrating a method for providing an optical communication system according to an embodiment.

In a first step S10, an optical device is provided, the optical device comprising a plurality of optical transmission fibers, each optical transmission fiber having a first end and a second end opposite to the first and, the optical device further comprising a connector interface, wherein the respective first ends of the plurality of optical transmission fibers form an array of connector elements on the connector interface.

In a second step S12, the first end and/or the second end of the plurality of optical transmission fibers are coupled to a respective plurality of waveguides, wherein the plurality of optical transmission fibers have a first mode field diameter and the plurality of waveguides have a second mode field diameter, wherein the ratio of the first mode field diameter and the second mode field diameter is no larger than 0.95.

An optical communication system employing a connection arrangement according to the disclosure can reduce the efficiency of coupling of power between the emitting waveguide ends and the distant area and thereby reduce the risk for human injury.

A multi-fiber connector in an arrangement according to an embodiment can have at least one waveguide end with MFD not higher than 9 $\mu$m at 1550 nm wavelength. As demonstrated above, the reduction of MFD in the waveguide end can advantageously increase the angular spreading of the emission coil of the waveguide end. This measure advantageously decreases the power in distant aperture stop

An optical communication system according to an embodiment can comprise a connection between a pair of optical waveguides formed by two multi-waveguide end connectors connecting more than said pair of optical waveguide ends, whereby a first waveguide end of said pair can receive light from the second waveguide end of said pair and wherein the said first waveguide has, at a given wavelength (1550 nm), a first specification range for the mode field diameter (MFD) and the second waveguide end is part of an optical circuit pack for managing DWDM signals and has, at the given wavelength, a second specification range for the MFD, wherein the second specification range is below the first specification range and is not extending beyond 9 $\mu$m. This reduces the risk for human injury if the optical connection to the circuit pack is opened.

Additionally the waveguide ends can be arranged in more than one row or along circle whereby directly neighbored waveguide ends have a spacing S of at least 3 mm, but directly neighbored nominal output waveguide ends have spacing of at least SQRT(2) x S.

The specific embodiments and the Figures merely serve to illustrate the techniques of the present disclosure, but should not be understood to imply any limitation, the scope of the disclosure is determined by the appended claims.

**Claims**

1. A method for providing an optical communication system (10), comprising:

   providing an optical device (12), the optical device (12) comprising a plurality of optical transmission fibers (14a, 14b, 14c), each optical transmission fiber (14a, 14b, 14c) having a first end and a second end opposite to the first end; the optical device (12) further comprising a connector interface (18), wherein the respective first ends of the plurality of optical transmission fibers (14a, 14b, 14c) form an array of connector elements (16a - 16h) on the connector interface (18); and
   coupling the first end and/or the second end of the plurality of optical transmission fibers (14a, 14b, 14c) to a respective plurality of waveguides (18a, 18b, 18c);
   wherein the plurality of optical transmission fibers (14a, 14b, 14c) have a first mode field diameter and the plurality of waveguides (18a, 18b, 18c) have a second mode field diameter; wherein a ratio of the first mode field diameter and the second mode field diameter is no larger than 0.95.

2. The method according to claim 1, wherein the ratio of the first mode field diameter and the second mode field diameter is no larger than 0.90, and in particular no larger than 0.85 or no larger than 0.80.

3. The method according to claim 1 or 2, wherein the first mode field diameter is no larger than 9.5 $\mu$m, and in particular no larger than 9.0 $\mu$m or no larger than 8.5 $\mu$m or no larger than 8.0 $\mu$m.

4. The method according to any of the preceding claims, wherein the second mode field diameter is no smaller than 10.0 $\mu$m, and in particular no smaller than 10.3 $\mu$m.

5. The method according to any of the preceding claims, wherein the plurality of optical transmission fibers (14a, 14b, 14c) have a first effective optical area and the plurality of waveguides (18a, 18b, 18c) have a second effective optical area, wherein a ratio of the first effective optical area and the second effective optical area is no larger than 0.90, and in particular no larger than 0.85 or no larger than 0.80.

6. The method according to any of the preceding claims, wherein a distance between neighboring first ends of the plurality of optical transmission fibers (14a, 14b, 14c) on the connector interface (18) is no larger than 10 mm, and in particular no larger than 9 mm or no larger than 8 mm.

7. The method according to any of the preceding claims, further comprising:
   adjusting a refractive index profile of the plurality of optical transmission fibers (14a, 14b, 14c) and/or the plurality of waveguides (18a, 18b, 18c) at the respective connector elements (16a - 16h).

8. An optical device (12), comprising:

   a plurality of optical transmission fibers (14a, 14b, 14c), each optical transmission fiber (14a, 14b, 14c) having a first end and a second end opposite to the first end; and
   a connector interface (18), wherein the respective first ends of the plurality of optical transmission fibers (14a, 14b, 14c) form an array of connector elements (16a - 16h) on the connector interface (18);
   wherein the plurality of optical transmission fibers (14a, 14b, 14c) have a first mode field diameter;
   wherein the first end and/or the second end of the plurality of optical transmission fibers (14a, 14b, 14c) are adapted to couple to a respective plurality of waveguides (18a, 18b, 18c) having a second mode field diameter;
   wherein a ratio of the first mode field diameter and the second mode field diameter is no larger than 0.95.

9. The optical device (12) according to claim 8, wherein the plurality of optical transmission fibers (14a, 14b, 14c) have a first effective optical area and the plurality of waveguides (18a, 18b, 18c) have a second effective optical area, wherein a ratio of the first effective optical area and the second effective optical area is no larger than 0.90, and in particular no larger than 0.85 or no larger than 0.80.

10. The optical device (12) according to claim 8 or 9, wherein a distance between neighboring first ends of the plurality of optical transmission fibers (14a, 14b, 14c) on the connector interface (18) is no larger than 10 mm, and in particular no larger than 9 mm or no larger than 8 mm.

11. The optical device (12) according to any of the claims 8 to 10, wherein the connector interface (18) comprises an adaptation element configured to adjust a refractive index profile of the plurality of optical transmission fibers (14a, 14b, 14c) and/or the plurality of waveguides (18a, 18b, 18c) at the respective connector elements (16a - i6h).

12. The optical device (12) according to any of the claims 8 to 11, wherein the connector interface (18) comprises a verification element that is adapted to prevent the respective first ends of the plurality of optical transmission fibers (14a, 14b, 14c) from coupling to a waveguide unless a ratio of the first mode field diameter and a mode field diameter of the waveguide is no larger than 0.95, and in particular no larger than 0.90.

13. The optical device (12) according to claim 12, wherein a shape of the verification element matches a complementary shape provided at the waveguide.

14. The optical device (12) according to any of the claims 8 to 13, wherein the optical device (12) is a multi-fiber connector, or comprises a multi-fiber connector.

15. An optical communication system (10) comprising:

   an optical device (12) according to any of claims 8 to 14; and
   the plurality of waveguides (18a, 18b, 18c);
   wherein the first end and/or the second end of the plurality of optical transmission fibers (14a, 14b, 14c) are coupled to the respective plurality of waveguides (18a, 18b, 18c), in particular detachably coupled to the respective plurality of waveguides (18a, 18b, 18c).

10

14a

14b

18

16a

18a

14c

18b

16b

18c

16c

12

Fig. 1a

12

16g

18

16h

16f

16e

16d

16c

$S_y$

16a

$S_x$

16b

Fig. 1b

Fig. 2

20a   20b

18

16a

16b
16c

16d

22

20d

20c

## Fig. 3

24

12

3,5 mm aperture stop

26

Waveguide end
arrangement
(example)

3,5 mm

S

Detector

100 mm

## Fig. 4

Hazard power P$_{hazard-2-F-S}$ per waveguide of 2-F-waveguide end connector (example) (mW)

Fig. 5a

Hazard power P$_{hazard-4-F-S}$ per waveguide of 4-F-waveguide end connector 4x2 flipped grid waveguide end arrangement (example) (mW)

Fig. 5b

28

Fig. 6

30

Fig. 7

32

Fig. 8

10

12

12

12

12

12

12

Fig. 9

(a) (b) (c) (d) (e)

Fig. 10

EP 3 845 939 A1

EP 3 845 939 A1

Fig. 11a

Fig. 11b

Fig. 11c

Fig. 11d

28

36

12

12

12

12

12

Fig. 12

38

12

Fig. 13

Fig. 14

Fig. 15

Fig. 16

Fig. 17

providing an optical device, the optical device comprising a plurality of optical transmission fibers, each optical transmission fiber having a first end and a second end opposite to the first end; the optical device further comprising a connector interface, wherein the respective first ends of the plurality of optical transmission fibers form an array of connector elements on the connector interface

S10

coupling the first end and/or the second end of the plurality of optical transmission fibers to a respective plurality of waveguides;

wherein the plurality of optical transmission fibers have a first mode field diameter and the plurality of waveguides have a second mode field diameter; wherein a ratio of the first mode field diameter and the second mode field diameter is no larger than 0.95

S12

Fig. 18

Europäisches
Patentamt

European
Patent Office

Office européen
des brevets

# EUROPEAN SEARCH REPORT

Application Number

EP 19 22 0026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/384005 A1 (BRUSBERG LARS MARTIN OTFRIED [US] ET AL) 19 December 2019 (2019-12-19) * paragraph [0082] - paragraph [0099]; figures 7-9, 10A * * paragraph [0054] - paragraph [0081]; figures 1A-B, 2-6 * * claims 1, 6, 7 * | 1-15 | INV. G02B6/38 ADD. G02B6/14 G02B6/26 |
| X | US 2017/160491 A1 (ZBINDEN ERIC J [US]) 8 June 2017 (2017-06-08) | 8-11,14 | |
| A | * paragraph [0048] - paragraph [0107]; figures 2-7, 8E, 8F, 9A-9C * | 1,6,7, 12,13,15 | |
| X | US 2017/160490 A1 (ZHANG HAIPENG [US] ET AL) 8 June 2017 (2017-06-08) | 8,9,11, 14 | |
| A | * paragraph [0025] - paragraph [0091]; figures 1-11 * | 1-7 | |
| X | US 2006/029334 A1 (QUINBY ERIC S [US] ET AL) 9 February 2006 (2006-02-09) | 8,10,14 | |
| A | * paragraph [0018] - paragraph [0026]; figures 1-4 * | 1,6,12, 15 | |

TECHNICAL FIELDS
SEARCHED      (IPC)

G02B
H04J

The present search report has been drawn up for all claims

| Place of search | Date of completion of the search | Examiner |
|---|---|---|
| Berlin | 12 June 2020 | A. Jacobs |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 22 0026

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2020

| Patent document cited in search report | | Publication date | Patent family member(s) | | Publication date |
|---|---|---|---|---|---|
| US 2019384005 | A1 | 19-12-2019 | US  2019384005 A1<br>WO  2019245747 A1 | | 19-12-2019<br>26-12-2019 |
| US 2017160491 | A1 | 08-06-2017 | NONE | | |
| US 2017160490 | A1 | 08-06-2017 | NONE | | |
| US 2006029334 | A1 | 09-02-2006 | AT   521004 T<br>EP  1782115 A1<br>ES  2370501 T3<br>PT  1782115 E<br>US  2006029334 A1<br>WO  2006022868 A1 | | 15-09-2011<br>09-05-2007<br>19-12-2011<br>04-11-2011<br>09-02-2006<br>02-03-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1059707 A2

**Non-patent literature cited in the description**

- **KYUNGHWAN OH ; UN-CHUL PAEK.** *Silica Optical Fiber Technology for Devices and Components: Design, Fabrication and International Standards,* ISBN 978-0-471-45558-5

- **C. D. HUSSEY et al.** Approximate analytical forms for the propagation characteristics of single-mode optical fibres. *Electron. Lett.,* 1985, vol. 21 (23), 1103